(19) Europäisches Patentamt
European Patent Office
Office européen des brevets

(11) **EP 4 535 672 A1**

(12) **EUROPEAN PATENT APPLICATION**
published in accordance with Art. 153(4) EPC

(43) Date of publication:
**09.04.2025 Bulletin 2025/15**

(21) Application number: **22948686.5**

(22) Date of filing: **01.07.2022**

(51) International Patent Classification (IPC):
***H04B 1/00*** *(2006.01)*

(52) Cooperative Patent Classification (CPC):
**H04B 1/00**

(86) International application number:
**PCT/CN2022/103439**

(87) International publication number:
**WO 2024/000587 (04.01.2024 Gazette 2024/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Shenzhen Yinwang Intelligent Technologies Co., Ltd.**
**Shenzhen, Guangdong 518129 (CN)**

(72) Inventors:
• **HUANG, Chongde**
  **Shenzhen, Guangdong 518129 (CN)**
• **SHI, Xianling**
  **Shenzhen, Guangdong 518129 (CN)**
• **CHEN, Shanjie**
  **Shenzhen, Guangdong 518129 (CN)**
• **YUE, Chaolei**
  **Shenzhen, Guangdong 518129 (CN)**
• **CAO, Guoliang**
  **Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **INTERFERENCE SIGNAL DETECTION METHOD AND APPARATUS**

(57)    This application discloses an interference signal detection method and apparatus. The method includes: obtaining, from a first cumulative result, a first superimposed signal whose signal strength peak value is not less than a detection threshold, where the first cumulative result is obtained by superimposing N return signal measurement results, the first cumulative result includes signal strength distribution of at least one superimposed signal in a plurality of temporal locations, and N is a positive integer; and determining whether the first superimposed signal is an interference signal. According to this application, interference signal detection can be implemented. This helps improve interference signal detection efficiency and improve sensor probing performance.

```
┌─────────────────────────────────────────────────────────────────┐
│ S301: Obtain a first superimposed signal from a first cumulative result │
└─────────────────────────────────────────────────────────────────┘
                                   │
                                   ▼
┌─────────────────────────────────────────────────────────────────┐
│ S302: Determine whether the first superimposed signal is an interference signal │
└─────────────────────────────────────────────────────────────────┘
                                   │
                                   ▼
┌─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐
│ S303: Output a detection result │
└ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘
```

FIG. 3

EP 4 535 672 A1

# Description

## TECHNICAL FIELD

This application relates to the field of radar interference detection, and in particular, to an interference signal detection method and apparatus.

## BACKGROUND

A lidar is widely used in self-driving for positioning, target object detection, curb/travelable area detection, lane mark detection, and the like. The lidar transmits a probing signal (for example, a laser pulse) to a target, and measures a delay between the probing signal and a received signal (for example, a target echo) reflected back from the target object, to determine a location of the target object.

During operation, a lidar A may be subject to interference, for example, solar light interference, or direct interference or scattering interference from a lidar B. As a result, interference signals exist in return signals measured by the lidar A. These interference signals may cause false signal detection and affect probing accuracy of the lidar.

## SUMMARY

This application discloses an interference signal detection method and apparatus, to improve interference signal identification efficiency and improve sensor probing performance.

According to a first aspect, this application provides an interference signal detection method. The method includes: obtaining a first superimposed signal from a first cumulative result, where the first cumulative result is obtained by superimposing N return signal measurement results, the first cumulative result includes signal strength distribution of at least one superimposed signal in a plurality of temporal locations, signal energy of the first superimposed signal is not less than a detection threshold, and N is a positive integer; and determining whether the first superimposed signal is an interference signal.

The method may be applied to a detection apparatus. The detection apparatus may be, for example, one or more of the following: a microcontroller unit (microcontroller unit, MCU), an electronic control unit (electronic control unit, ECU), or a multi-domain controller (multi-domain controller, MDC) in a vehicle. The detection apparatus may alternatively be a lidar sensor, a millimeter-wave radar sensor, an ultrasonic sensor, or another sensor that calculates a target distance based on a measured return signal, or may be a microcontroller unit (microcontroller unit, MCU) or an electronic control unit (electronic control unit, ECU) in a sensor. The detection apparatus may alternatively be a component in an MCU or a component in an ECU. The component may be, for example, a chip or an integrated circuit.

Herein, an interference signal may be understood as an actual interference signal that interferes with a sensor, or a signal with relatively low confidence, a suspected interference signal, or a potential suspicious signal to be further determined. This is not specifically limited herein.

In the N return signal measurement results, some return signal measurement results may include signal strength distribution of at least one return signal in the plurality of temporal locations, or may not include any return signal. This is not specifically limited herein.

For example, the return signal may be a received optical signal, an ultrasonic signal, or a millimeter wave signal.

For example, the return signal measurement result may be a time of flight (time of flight, TOF) measurement result. The ToF measurement may be understood in a broad sense as a measurement manner of obtaining a distance from a target object to a receive end by measuring time taken by an object, a particle, light, or a wave to travel a specific distance through a fixed medium. For details, refer to definitions and explanations in a conventional technology.

For example, because the first cumulative result is obtained by superimposing the N return signal measurement results, a signal strength corresponding to any temporal location in the first cumulative result may be a sum of signal strengths corresponding to the temporal location in the N return signal measurement results. The signal strength corresponding to the any temporal location in the first cumulative result is greater than or equal to 0.

It may be understood that the first superimposed signal is included in the at least one superimposed signal in the first cumulative result.

For example, signal energy of the first superimposed signal may be a maximum signal strength of the first superimposed signal, or may be a sum, an average value, or another statistical value of signal strengths of the first superimposed signal.

Herein, the detection threshold is used to obtain the first superimposed signal from the at least one superimposed signal in the first cumulative result. The detection threshold may be preset by a vendor (for example, a lidar sensor vendor), or may be obtained by the detection apparatus based on signal strengths of a superimposed signal in the first cumulative result. For example, the detection threshold is obtained by performing summation, averaging, or other calculation processing on the signal strengths of the superimposed signal in the first cumulative result.

It may be understood that, when manners of calculating the signal energy of the first superimposed signal are different, corresponding detection thresholds are also different. For example, when the signal energy of the first superimposed signal is the maximum signal strength of the first superimposed signal, the detection threshold is a first detection threshold; or when the signal energy of the first superimposed signal is the sum of the signal strengths of the first superimposed signal, the detection threshold is a second detection threshold. A value of the first detection threshold is not equal to a value of the second detection threshold.

According to the foregoing method, interference detection is performed on a superimposed signal whose signal strength is not less than the detection threshold in superimposed results in a plurality of return signal measurement results, to improve interference signal identification efficiency, helping improve sensor probing performance.

Optionally, the first superimposed signal corresponds to a first time range; and determining whether the first superimposed signal is an interference signal includes: determining, based on the first time range, whether the first superimposed signal is an interference signal.

The first time range includes some or all consecutive temporal locations in the plurality of temporal locations.

For example, the first time range includes temporal locations between a start temporal location corresponding to the first superimposed signal and an end temporal location corresponding to the first superimposed signal. For example, the start temporal location corresponding to the first superimposed signal may be a start moment of a rising edge of the first superimposed signal, and the end temporal location corresponding to the first superimposed signal may be an end moment of a falling edge of the first superimposed signal.

For example, the first time range includes a full set of consecutive temporal locations between a 1st temporal location corresponding to a signal strength greater than or equal to a target threshold and a last temporal location corresponding to a signal strength greater than or equal to the target threshold in the first superimposed signal (including the 1st temporal location and the last temporal location). It may be understood that a time period formed by the 1st temporal location and the last temporal location is included in a time period formed by the start temporal location corresponding to the first superimposed signal and the end temporal location corresponding to the first superimposed signal. Optionally, the first time range includes some consecutive temporal locations between the 1st temporal location and the last temporal location.

Herein, the target threshold may be used to determine the first time range corresponding to the first superimposed signal. The target threshold may be preset, or may be obtained by the detection apparatus based on signal strengths of a superimposed signal in the first cumulative result. For example, the target threshold is obtained by performing median calculation, averaging, or other calculation processing on the signal strengths of the superimposed signal in the first cumulative result. The target threshold is greater than 0, and the target threshold is less than a signal strength peak value of the first superimposed signal.

In the foregoing implementation, because a plurality of return signal measurement results corresponding to a same time range are correlated, the first time range may be used to detect whether the first superimposed signal is an interference signal. This helps improve interference signal detection efficiency.

Optionally, the method further includes: performing difference processing on the N return signal measurement results to obtain a difference result, where the difference result includes signal strength distribution of a plurality of first difference points in the plurality of temporal locations; and the determining, based on the first time range, whether the first superimposed signal is an interference signal includes: when a signal strength of a first difference point corresponding to the first time range in the difference result is not less than a first threshold, determining that the first superimposed signal is an interference signal.

Herein, the first threshold may be preset by a vendor, may be obtained by the detection apparatus based on the signal strengths of the first superimposed signal, or may be obtained by the detection apparatus based on the signal strengths of the superimposed signal in the first cumulative result.

Each of the plurality of first difference points corresponds to one temporal location in the plurality of temporal locations. A signal strength of the first difference point in the temporal location is obtained by performing difference processing based on signal strengths corresponding to the temporal location in the N return signal measurement results. It may be understood that a quantity of first difference points in the difference result is equal to a quantity of temporal locations.

That the signal strength of the first difference point corresponding to the first time range is not less than the first threshold is: At least one temporal location exists in the first time range, and a signal strength of the first difference point in the at least one temporal location is not less than the first threshold.

In the foregoing implementation, differences between the plurality of return signal measurement results may be compared through difference processing, and whether the first superimposed signal is an interference signal can be effectively identified based on the signal strength of the first difference point corresponding to the first time range. This helps improve interference signal detection efficiency.

Optionally, the N return signal measurement results correspond to K groups of measurement results, each group of measurement results includes Q adjacent return signal measurement results in the N return signal measurement results, and Q and K are positive integers less than N; and the difference result is obtained by performing difference processing on K superimposed results, and the K superimposed results are obtained by superimposing each group of measurement results in the K groups of measurement results.

Four ToF measurement results are used as an example of the N return signal measurement results to describe a possible grouping manner. The four ToF measurement results are ToF_1, ToF_2, ToF_3, and ToF_4.

In a grouping manner, two adjacent groups of measurement results may include a same return signal measurement result.

For example, K=3 and Q=2, that is, the N return signal measurement results are divided into three groups, and two return signal measurement results are included in each group. The three groups are: a group 1 including ToF_1 and ToF_2, a group 2 including ToF_2 and ToF_3, and a group 3 including ToF_3 and ToF_4.

For another example, K=2 and Q=3, that is, the N return signal measurement results are divided into two groups, and three return signal measurement results are included in each group. The two groups are: a group 1 including ToF_1, ToF_2, and ToF_3, and a group 2 including ToF_2, ToF_3, and ToF_4.

In still another grouping manner, two adjacent groups of measurement results do not include a same return signal measurement result.

For example, K=2 and Q=2, that is, the N return signal measurement results are divided into two groups, and two return signal measurement results are included in each group. The two groups are: a group 1 including ToF_1 and ToF_2, and a group 2 including ToF_3 and ToF_4.

In another implementation, a quantity of return signal measurement results included in each group of measurement results after grouping may be not limited.

For example, K=3, that is, the N return signal measurement results are divided into three groups. The three groups are: a group 1 including ToF_1, a group 2 including ToF_2 and ToF_3, and a group 3 including ToF_3 and ToF_4. In this case, when each group is superimposed, a group that includes a smaller quantity of return signal measurement results may be multiplied, so that the quantity of the return signal measurement results in this group is the same as a quantity of return signal measurement results included in another group.

In the foregoing implementation, the N return signal measurement results are first grouped and superimposed, and then difference processing is performed on a plurality of superimposed results to obtain the difference result. This can effectively reduce randomness of interference in the N return signal measurement results, and reduce a missed detection rate of an interference signal.

Optionally, the N return signal measurement results correspond to K groups of measurement results, each group of measurement results includes Q adjacent return signal measurement results in the N return signal measurement results, and Q and K are positive integers less than N; and the difference result is obtained based on statistics on K initial difference results, and the K initial difference results are obtained by performing difference processing on each group of measurement results in the K groups of measurement results.

Herein, a statistical manner includes but is not limited to summation, averaging, or calculating a maximum value.

In the foregoing implementation, the K groups of measurement results are first grouped and difference processing is separately performed, and then the statistics are collected on the plurality of obtained initial difference results to obtain the difference result. This can effectively reduce randomness of interference in the N return signal measurement results, and reduce a missed detection rate of an interference signal.

Optionally, a second temporal location is any one of the plurality of temporal locations, and a signal strength of a first difference point corresponding to the second temporal location in the difference result is one of the following cases:

a difference between a maximum value of signal strengths corresponding to the second temporal location and a minimum value of the signal strengths corresponding to the second temporal location in the N return signal measurement results;

a maximum value of a difference between signal strengths corresponding to the second temporal location in each adjacent pairs of return signal measurement results in the N return signal measurement results; or

a variance or a standard deviation of the signal strengths corresponding to the second temporal location in the N return signal measurement results.

In the foregoing implementation, a plurality of feasible difference calculation manners are provided for directly performing difference processing on the N return signal measurement results, diversity of difference processing is increased, and a basis is provided for subsequent interference signal detection.

Optionally, the method further includes: superimposing each of K groups of measurement results to obtain K superimposed results, where each of the K superimposed results includes signal strength distribution of at least one second superimposed signal in the plurality of temporal locations, each of the K groups of measurement results includes Q adjacent return signal measurement results in the N return signal measurement results, and both Q and K are positive integers less than N; and the determining, based on the first time range, whether the first superimposed signal is an interference signal includes: determining, in the K superimposed results, a first statistical count of superimposed results in which signal energy that is of a second superimposed signal and that corresponds to the first time range exceeds a second threshold; and when the first statistical count is less than a third threshold, determining that the first superimposed signal is an interference signal.

Herein, the first statistical count may be understood as a statistical value of a quantity of superimposed results that meet a threshold detection condition in the K superimposed results, that is, a quantity of successful threshold detection times. That the superimposed results meet the threshold detection condition means that the signal energy of the second superimposed signal corresponding to the first time range in the superimposed result exceeds the second threshold.

For example, the signal energy of the second superimposed signal corresponding to the first time range may be specifically: a maximum signal strength of the second superimposed signal corresponding to the first time range, or a statistical value of signal strengths of the second superimposed signal corresponding to the first time range, where the statistical value of the signal strengths of the second superimposed signal may be a sum, an average value, or the like of the signal strengths of the second superimposed signal.

Herein, the second threshold may be preset by a vendor, or may be dynamically set by the detection apparatus based on the superimposed result. Second thresholds corresponding to different superimposed results may be the same or different. Any superimposed result of the K superimposed results, for example, a superimposed result 1, is used as an example for description. A second threshold corresponding to the superimposed result 1 may be an average value of signal strengths of the second superimposed signal in the superimposed result 1, or may be obtained by performing weighted summation on the signal strengths of the second superimposed signal in the superimposed result 1, or the like.

The third threshold may be preset by a vendor, or may be obtained by the detection apparatus based on a sum of statistical quantities of second superimposed signals whose signal energy exceeds the second threshold in the K superimposed results. The third threshold is less than or equal to K.

In the foregoing implementation, statistics are collected on a quantity of superimposed results that meet the threshold detection condition in the K superimposed results that are obtained based on the N return signal measurement results. This can effectively identify whether the first superimposed signal is an interference signal, and help improve interference signal detection efficiency.

Optionally, the N return signal measurement results correspond to a first spatial location, and the method further includes: obtaining M return signal measurement results in a second spatial location adjacent to the first spatial location, where M is a positive integer less than or equal to N; and the determining, based on the first time range, whether the first superimposed signal is an interference signal includes: determining, based on the first time range and the M return signal measurement results, whether the first superimposed signal is an interference signal.

Herein, that the N return signal measurement results correspond to the first spatial location means that the N return signal measurement results are obtained by performing measurement in the first spatial location.

For example, the first spatial location and the second spatial location may be two adjacent angles in a horizontal direction, two adjacent angles in a vertical direction, or two adjacent angles in another direction. This is not specifically limited herein.

In the M return signal measurement results, some return signal measurement results may include signal strength distribution of at least one return signal in the plurality of temporal locations, or may not include any return signal. This is not specifically limited herein.

In the foregoing implementation, whether the first superimposed signal is an interference signal can be effectively identified based on a degree of correlation of the plurality of return signal measurement results in adjacent spatial locations within a same time range. This provides a possibility of implementing interference signal detection in a spatial dimension.

Optionally, the determining, based on the first time range and the M return signal measurement results, whether the first superimposed signal is an interference signal includes: grouping the M return signal measurement results, and superimposing grouped return signal measurement results to obtain P superimposed results, where each of the P superimposed results includes signal strength distribution of at least one third superimposed signal in the plurality of temporal locations, and P is a positive integer less than M; determining, in the P superimposed results, a second statistical count of superimposed results in which signal energy that is of a third superimposed signal and that corresponds to the first time range exceeds a fourth threshold; and when the second statistical count is less than a fifth threshold, determining that the first superimposed signal is an interference signal.

Herein, the second statistical count may be understood as a statistical value of a quantity of superimposed results that meet a second threshold detection condition in the P superimposed results, that is, a quantity of successful threshold detection times. That the superimposed results meet the second threshold detection condition means that the signal energy of the third superimposed signal corresponding to the first time range in the superimposed result exceeds the fourth threshold.

For example, the signal energy of the third superimposed signal corresponding to the first time range may be specifically: a maximum signal strength of the third superimposed signal corresponding to the first time range, or a statistical value of signal strengths of the third superimposed signal corresponding to the first time range, where the statistical value of the signal strengths of the third superimposed signal may be a sum, an average value, or the like of signal strengths of the third superimposed signal. This is not specifically limited herein.

Herein, the fourth threshold may be preset by a vendor, or may be dynamically set by the detection apparatus based on the superimposed result. Fourth thresholds corresponding to different superimposed results may be the same or different. A superimposed result 2 of the P superimposed results is used as an example. A fourth threshold corresponding to the superimposed result 2 may be an average value of signal strengths of the third superimposed signal in the superimposed result 2, or may be obtained by performing weighted summation on the signal strengths of the third superimposed signal in the superimposed result 2, or the like.

The fifth threshold may be preset by a vendor, or may be obtained by the detection apparatus based on a sum of statistical quantities of third superimposed signals whose signal energy exceeds the fourth threshold in the P superimposed results. The fifth threshold is less than or equal to P.

In the foregoing implementation, statistics are collected on a quantity of superimposed results that meet the threshold detection condition in the P superimposed results that are obtained based on the M return signal measurement results in the adjacent spatial locations. This can effectively identify whether the first superimposed signal is an interference signal, and help improve interference signal detection efficiency.

Optionally, when the second statistical count is a first value, confidence that the first superimposed signal is an interference signal is a first probability; or when the second statistical count is a second value, confidence that the first superimposed signal is an interference signal is a second probability, where the first value is less than the second value, the second value is less than the fifth threshold, and the first probability is greater than the second probability.

In other words, a smaller second statistical count indicates higher confidence that the first superimposed signal is an interference signal.

For example, a range of the second statistical count may be also determined, to determine the confidence. For example, when the second statistical count is less than or equal to a first preset threshold, the confidence that the first superimposed signal is an interference signal is the first probability; or when the second statistical count is greater than a first preset threshold and less than a second preset threshold, the confidence that the first superimposed signal is an interference signal is the second probability.

It may be understood that, for the first probability and the second probability, two confidence values are merely provided as an example herein, but this application does not limit the two confidence values.

In the foregoing implementation, confidence information may be obtained based on the second statistical count, to provide a reference for back-end processing, helping improve back-end data processing efficiency.

Optionally, the determining, based on the first time range and the M return signal measurement results, whether the first superimposed signal is an interference signal includes: superimposing the M return signal measurement results to obtain a second cumulative result, where the second cumulative result includes signal strength distribution of at least one fourth superimposed signal in the plurality of temporal locations; and when signal energy of a fourth superimposed signal corresponding to the first time range in the second cumulative result is less than a sixth threshold, determining that the first superimposed signal is an interference signal.

Herein, the sixth threshold may be preset by a vendor, may be obtained by the detection apparatus based on signal energy of the fourth superimposed signal in the second cumulative result, or may be obtained based on signal energy of the superimposed signal in the first cumulative result.

Herein, signal energy of the fourth superimposed signal corresponding to the first time range may be a maximum signal strength of the fourth superimposed signal, or may be a sum, an average value, or another statistical value of signal strengths of the fourth superimposed signal. It may be understood that, when manners of calculating the signal energy of the fourth superimposed signal are different, corresponding sixth thresholds are also different.

In the foregoing implementation, whether the first superimposed signal is an interference signal can be effectively identified based on signal energy of a superimposed signal corresponding to the first time range in the plurality of return signal measurement results in the adjacent spatial locations. This provides a possibility of implementing interference signal detection in a spatial dimension.

Optionally, the method further includes: obtaining confidence information, where the confidence information is obtained based on the signal energy of the first superimposed signal and the signal energy of the fourth superimposed signal corresponding to the first time range.

For example, the confidence may be a weighted difference between the signal energy of the fourth superimposed signal corresponding to the first time range and the signal energy of the first superimposed signal.

In the foregoing implementation, a possibility that the first superimposed signal is an interference signal is represented by using the confidence information, to provide a reference for back-end processing, helping improve back-end data processing efficiency.

Optionally, after determining that the first superimposed signal is an interference signal, the method further includes: outputting a detection result, where the detection result includes the first time range and/or an interference tag, and the interference tag indicates that the first superimposed signal is an interference signal.

In the foregoing implementation, a back end may be prompted to ignore a signal corresponding to the first time range when processing corresponding data, reducing data processing pressure of the back end.

Optionally, the detection result further includes the confidence information, and the confidence information indicates confidence that the first superimposed signal is an interference signal.

In the foregoing implementation, the confidence information may provide a reference for back-end processing, helping improve data processing efficiency.

According to a second aspect, this application provides an interference signal detection apparatus. The apparatus includes: an obtaining unit, configured to obtain a first superimposed signal from a first cumulative result, where the first cumulative result is obtained by superimposing N return signal measurement results, the first cumulative result includes signal strength distribution of at least one superimposed signal in a plurality of temporal locations, signal energy of the first superimposed signal is not less than a detection threshold, and N is a positive integer; and a detection unit, configured to determine whether the first superimposed signal is an interference signal.

Optionally, the first superimposed signal corresponds to a first time range; and the detection unit is specifically configured to determine, based on the first time range, whether the first superimposed signal is an interference signal.

Optionally, the detection unit is further configured to perform difference processing on the N return signal measurement results to obtain a difference result, where the difference result includes signal strength distribution of a plurality of first difference points in the plurality of temporal locations; and the detection unit is specifically configured to: when a signal strength of a first difference point corresponding to the first time range in the difference result is not less than a first threshold, determine that the first superimposed signal is an interference signal.

Optionally, the N return signal measurement results correspond to K groups of measurement results, each group of measurement results includes Q adjacent return signal measurement results in the N return signal measurement results, and Q and K are positive integers less than N; and the difference result is obtained by performing difference processing on K superimposed results, and the K superimposed results are obtained by superimposing each group of measurement results in the K groups of measurement results.

Optionally, the N return signal measurement results correspond to K groups of measurement results, each group of measurement results includes Q adjacent return signal measurement results in the N return signal measurement results, and Q and K are positive integers less than N; and the difference result is obtained based on statistics on K initial difference results, and the K initial difference results are obtained by performing difference processing on each group of measurement results in the K groups of measurement results.

Optionally, a second temporal location is any one of the plurality of temporal locations, and a signal strength of a first difference point corresponding to the second temporal location in the difference result is one of the following cases:

a difference between a maximum value of signal strengths corresponding to the second temporal location and a minimum value of the signal strengths corresponding to the second temporal location in the N return signal measurement results;

a maximum value of a difference between signal strengths corresponding to the second temporal location in each adjacent pairs of return signal measurement results in the N return signal measurement results; or

a variance or a standard deviation of the signal strengths corresponding to the second temporal location in the N return signal measurement results.

Optionally, the detection unit is further configured to superimpose each of K groups of measurement results to obtain K superimposed results, where each of the K superimposed results includes signal strength distribution of at least one second superimposed signal in the plurality of temporal locations, each of the K groups of measurement results includes Q adjacent return signal measurement results in the N return signal measurement results, and both Q and K are positive integers less than N; and the detection unit is specifically configured to: determine, in the K superimposed results, a first statistical count of superimposed results in which signal energy that is of a second superimposed signal and that corresponds to the first time range exceeds a second threshold; and when the first statistical count is less than a third threshold, determine that the first superimposed signal is an interference signal.

Optionally, the N return signal measurement results correspond to a first spatial location, the obtaining unit is further configured to obtain M return signal measurement results in a second spatial location adjacent to the first spatial location, where M is a positive integer less than or equal to N; and the detection unit is specifically configured to determine, based on the first time range and the M return signal measurement results, whether the first superimposed signal is an interference signal.

Optionally, the detection unit is specifically configured to: group the M return signal measurement results, and superimpose grouped return signal measurement results to obtain P superimposed results, where each of the P superimposed results includes signal strength distribution of at least one third superimposed signal in the plurality of temporal locations, and P is a positive integer less than M; determine, in the P superimposed results, a second statistical count of superimposed results in which signal energy that is of a third superimposed signal and that corresponds to the first time range exceeds a fourth threshold; and when the second statistical count is less than a fifth threshold, determine that the first superimposed signal is an interference signal.

Optionally, when the second statistical count is a first value, confidence that the first superimposed signal is an interference signal is a first probability; or when the second statistical count is a second value, confidence that the first superimposed signal is an interference signal is a second probability, where the first value is less than the second value, the second value is less than the fifth threshold, and the first probability is greater than the second probability.

Optionally, the detection unit is specifically configured to: superimpose the M return signal measurement results to obtain a second cumulative result, where the second cumulative result includes signal strength distribution of at least one fourth superimposed signal in the plurality of temporal locations; and when signal energy of a fourth superimposed signal corresponding to the first time range in the second cumulative result is less than a sixth threshold, determine that the first superimposed signal is an interference signal.

Optionally, the detection unit is further configured to obtain confidence information, where the confidence information is obtained based on the signal energy of the first superimposed signal and the signal energy of the fourth superimposed signal corresponding to the first time range.

Optionally, the apparatus further includes an output unit, where the output unit is configured to output a detection result, where the detection result includes the first time range and/or an interference tag, and the interference tag indicates that the first superimposed signal is an interference signal.

Optionally, the detection result further includes the confidence information, and the confidence information indicates confidence that the first superimposed signal is an interference signal.

According to a third aspect, this application provides an apparatus. The apparatus includes at least one processor and a communication interface, and the communication interface is configured to provide an information input and/or output for the at least one processor. The apparatus may be a chip or an integrated circuit, or may be the apparatus according to the second aspect. The apparatus is configured to implement the method according to the first aspect or any one of the possible embodiments of the first aspect.

According to a fourth aspect, this application provides a terminal. The terminal includes the apparatus according to the second aspect or any one of the possible embodiments of the second aspect, or includes the apparatus according to the third aspect.

For example, the terminal may be a vehicle, a robot, an unmanned aerial vehicle, or another terminal that calculates a target distance by using a measured return signal.

According to a fifth aspect, this application provides a computer-readable storage medium, including computer instructions. When the computer instructions are run by a processor, the method according to the first aspect or any one of the possible implementations of the first aspect is implemented.

According to a sixth aspect, this application provides a computer program product. When the computer program product is executed by a processor, the method according to the first aspect or any one of the possible embodiments of the first aspect is implemented. For example, the computer program product may be a software installation package. When the method provided in any possible design of the first aspect needs to be used, the computer program product may be downloaded and executed on the processor, to implement the method according to the first aspect or any one of the possible embodiments of the first aspect.

Technical effects of the second aspect to the sixth aspect are the same as those of the first aspect. Details are not described herein.

## BRIEF DESCRIPTION OF DRAWINGS

FIG. 1 is a diagram of detecting an interference signal according to an embodiment of this application;
FIG. 2 is a diagram of a system architecture according to an embodiment of this application;
FIG. 3 is a schematic flowchart of an interference signal detection method according to an embodiment of this application;
FIG. 4 is a diagram of a first cumulative result according to an embodiment of this application;
FIG. 5A is a diagram of difference processing according to an embodiment of this application;
FIG. 5B is a diagram of another difference processing according to an embodiment of this application;
FIG. 5C is a diagram of another difference processing according to an embodiment of this application;
FIG. 6 is a diagram of threshold-based detection according to an embodiment of this application;
FIG. 7 is a diagram of measuring a return signal according to an embodiment of this application;
FIG. 8A is a diagram of detecting return signal measurement results in adjacent spatial locations according to an embodiment of this application;
FIG. 8B is another diagram of detecting return signal measurement results in adjacent spatial locations according to an embodiment of this application;
FIG. 9 is a diagram of a structure of a detection apparatus according to an embodiment of this application; and
FIG. 10 is a diagram of a structure of an interference detection apparatus according to an embodiment of this application.

## DESCRIPTION OF EMBODIMENTS

It should be noted that modifiers such as "first" and "second" in this application are merely intended to distinguish between different described objects, but are not intended to limit locations, a sequence, priorities, quantities, content, or the like of the described objects. For example, if the described object is a "field", ordinal numbers before the "field" in a "first field" and a "second field" do not limit locations or a sequence of the "fields", and "first" and "second" do not limit whether "fields" modified by "first" and "second" are in a same message, and do not limit a sequence of the "first field" and the "second field". For another example, if a described object is a "level", ordinal numbers before "levels" in a "first level" and a "second level" do not limit priorities of the "levels". For another example, a quantity of described objects is not limited by a prefix word, and may be one or more. A "first device" is used as an example, where a quantity of "devices" may be one or more. In addition, objects decorated by different prefix words may be the same or different. For example, if a described object is a "device", a "first device" and a "second device" may be a same device, devices of a same type, or devices of different types. For another example, if a described object is "information", "first information" and "second information" may be information of same content or information of different content. In conclusion, use of the prefix words used to distinguish between the described objects in embodiments of this application does not constitute a limitation on the described objects. For descriptions of the described objects, refer to the context descriptions in the claims or embodiments, and use of the prefix words should not constitute a redundant limitation.

It should be noted that, in embodiments of this application, a description manner like "at least one (or at least one piece) of a1, a2, ..., or an" is used, including a case in which any one of a1, a2, ..., or an exists alone, and also including a case of any combination of a1, a2, ..., or an. Each case may exist alone. For example, a description manner of "at least one of a, b, or c" includes a case of a single a, a single b, a single c, a combination of a and b, a combination of a and c, a combination of b and c, or a combination of a, b, and c.

For ease of understanding, the following first describes related terms that may be used in embodiments of this application.

A signal strength means an amplitude of a signal. For example, an amplitude of a signal in a specific temporal location is referred to as a signal strength of the signal in the temporal location.

Signal strength distribution means distribution of signal strengths of a signal in different temporal locations.

Signal energy is obtained based on a signal strength of a signal. For example, the signal energy of the signal may be a maximum value of signal strengths of the signal (or referred to as a signal strength peak value of the signal), or may be obtained by collecting statistics based on summation, averaging, or the like on the signal strengths of the signal.

A lidar (Laser Radar) may also be referred to as laser detection and ranging (light detection and ranging, LiDAR, or laser detection and ranging, LADAR). A lidar may determine a distance between a target object and the radar by obtaining a delay (which may also be time of flight) between time when a laser pulse is transmitted to time when an echo pulse reflected back from the laser pulse is detected, to implement ranging.

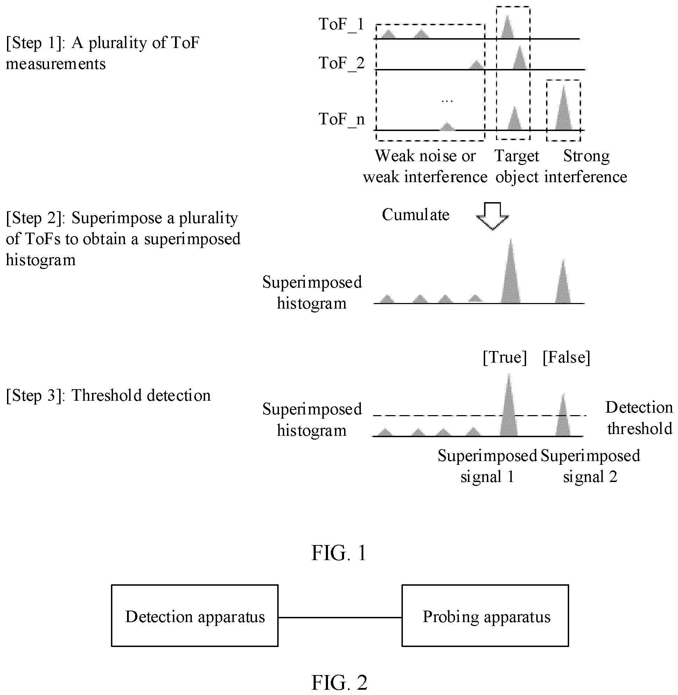

During operation, the lidar is susceptible to interference from ambient light, another lidar operating in a same frequency band, and the like. To detect the interference to the lidar, a measurement method based on Time-correlated single-photon counting (Time-correlated single-photon counting, TCSPC) is provided, specifically including the following steps:
Refer to FIG. 1. Step 1: Initiate a plurality of time of flights (time of flight, TOF) to a same location to obtain a plurality of ToF measurement results, where each ToF measurement may also be referred to as one micro event measurement. Step 2: Superimpose (or cumulate) the plurality of ToF measurement results to obtain a superimposed histogram (it may be understood that, the histogram is a representation form of a cumulative result or a superimposed result). Step 3: Perform threshold detection on the superimposed histogram, and determine a superimposed signal whose signal strength is greater than a detection threshold as a target signal. It can be learned that the detection method has a specific capability of identifying weak noise or weak interference. However, after the plurality of ToF measurement results are superimposed, for strong interference, one superimposed signal whose signal strength exceeds the detection threshold is also generated in the superimposed histogram, for example, a superimposed signal 2 in FIG. 1. Consequently, the superimposed signal is mistakenly considered as the target signal corresponding to a target object, causing false detection of the target signal and severely affecting probing accuracy of the lidar.

The strong interference may be, for example, direct interference from another lidar, namely, a laser pulse that is received by a lidar A and transmitted by a lidar C. The strong interference may be, for example, transmission interference from another lidar, namely, a laser pulse that is received by the lidar A, reflected back from a target object, and transmitted by a lidar B to the target object.

For the foregoing problem, an embodiment of this application provides an interference signal detection method, to improve interference signal identification efficiency and improve radar sensor probing performance.

The following describes technical solutions of this application with reference to accompanying drawings.

FIG. 2 shows an example of a diagram of a communication system architecture. The system is used for interference signal detection. As shown in FIG. 2, the system includes at least a detection apparatus and a probing apparatus, where the detection apparatus may communicate with the probing apparatus in a wired or wireless manner.

The probing apparatus may receive a return signal (for example, a light signal, a millimeter wave signal, or an ultrasonic wave signal). For example, the probing apparatus may initiate a time of flight (time of flight, TOF) measurement to receive a return signal. Optionally, the probing apparatus may obtain a ToF measurement result based on the return signal. The ToF measurement result includes signal strength distribution of at least one return signal on a time axis (or in a plurality of temporal locations). Based on operating bands of probing apparatuses, the probing apparatuses may be classified into laser probing apparatuses, millimeter wave probing apparatuses, ultrasonic probing apparatuses, and the like. In some scenarios, a probing apparatus includes a plurality of detectors, and the plurality of detectors may operate in different bands. In other words, the probing apparatus may alternatively be a fusion probing apparatus, for example, a probing apparatus that combines a laser detector and a camera.

Optionally, the probing apparatus may include a detector, a pulse receiver, or the like. In a possible implementation, a function of the detector is specifically implemented by a probing element, and the probing element includes but is not limited to an avalanche photodetector (avalanche photodetector, APD), a single-photon avalanche diode (single-photon avalanche diode, SPAD), an electron multiplying charge-coupled device (electron multiplying charge-coupled device, EMCCD), or the like. Optionally, probing elements in the detector may be arranged in an array, for example, may be an array of a specification like a $1\times2$ array, a $2\times3$ array, or a $3\times3$ array. This is not limited in this application.

It should be noted that the probing apparatus may include a transmitter, or the probing apparatus may correspond to a specific transmitter. The transmitter may transmit a signal, and a return signal received by the probing apparatus includes a signal corresponding to the transmit signal. Certainly, the return signal may further include an ambient light signal or a signal transmitted by another probing apparatus.

For example, the probing apparatus may perform probing a plurality of times to obtain a plurality of return signal measurement results.

The detection apparatus has a data processing capability. For example, the detection apparatus may include one or more of the following modules: a central processing unit (central processing unit, CPU), an application processor (application processor, AP), a time-to-digital converter (Time-to-Digital Converter, TDC), a microcontroller unit (microcontroller unit, MCU), an electronic control unit (electronic control unit, ECU), a filter, a graphics processing unit (graphics processing unit, GPU), a microprocessor unit (microprocessor unit, MPU), an application-specific integrated circuit (Application-Specific Integrated Circuit, ASIC), an image signal processor (image signal processor, ISP), a digital signal processor (digital signal processor, DSP), a field programmable logic gate array (Field Programmable Gate Array, FPGA), a complex programmable logic device (Complex programmable logic device, CPLD), and a coprocessor (assisting the central processing unit in completing corresponding processing and application), a micro control unit (Microcontroller Unit, MCU), a neural-network processing unit (neural-network processing unit, NPU), and/or the like.

The detection apparatus can process a measurement result of a return signal (briefly referred to as a return signal measurement result).

The detection apparatus can further process a cumulative result of the return signal measurement result. The cumulative result is obtained by superimposing the plurality of return signal measurement results. Optionally, a superimposition operation may be performed by the detection apparatus, the probing apparatus, or a third-party apparatus. This is not specifically limited herein.

For example, after receiving a return signal, the probing apparatus provides an obtained electrical signal to the detection apparatus, and the detection apparatus processes the electrical signal to obtain the return signal measurement result. The detection apparatus superimposes a plurality of return signal measurement results to obtain the foregoing cumulative result.

For another example, after receiving a return signal, the probing apparatus processes the return signal to obtain a return signal measurement result, and then provides the return signal measurement result to the detection apparatus. In a possible solution, the detector in the probing apparatus also has a data processing function, and can preprocess the electrical signal obtained from the received return signal. The preprocessing includes but is not limited to one or more of the following: analog-to-digital conversion, ToF decoding, filtering, and the like. For example, the detector may perform analog-to-digital conversion on the electrical signal, perform ToF decoding, and output the return signal measurement result to the detection apparatus. The detection apparatus superimposes a plurality of return signal measurement results to obtain the foregoing cumulative result.

For another example, the probing apparatus performs analog-to-digital conversion on the electrical signal obtained from the received return signal, and outputs an analog signal. The analog signal is further processed to obtain the cumulative result of the return signal measurement result. Further processing may be performed by the detection apparatus, or another device.

In an implementation, the detection apparatus can obtain a plurality of return signal measurement results, superimpose the plurality of return signal measurement results to obtain a first cumulative result, where the first cumulative result includes signal strength distribution of at least one superimposed signal at the plurality of temporal locations, obtain a first superimposed signal from the at least one superimposed signal, and determine whether the first superimposed signal is an interference signal, where a signal strength peak value of the first superimposed signal is not less than a detection threshold. In conclusion, the detection apparatus can perform interference detection on a superimposed signal whose signal strength is not less than the detection threshold in superimposed results in the plurality of return signal measurement results, to improve interference signal identification efficiency, helping improve sensor probing performance.

It should be noted that the detection apparatus and the probing apparatus may be separately and independently disposed, or may be coupled together, or some modules of the detection apparatus and the probing apparatus are coupled together, and some modules are independently disposed.

For example, the detection apparatus and the probing apparatus are coupled together. The probing apparatus may be a detector in a lidar (or a millimeter-wave radar, or an ultrasonic radar), and the detection apparatus may also be located in the lidar (or the millimeter-wave radar, or the ultrasonic radar). For another example, the detection apparatus may be integrated into a detector as a chip.

For example, the detection apparatus and the probing apparatus are independently disposed. The probing apparatus may be a lidar (or a millimeter-wave radar, or an ultrasonic radar), and the detection apparatus may be one or more of the following: a microcontroller unit (microcontroller unit, MCU), an electronic control unit (electronic control unit, ECU), a multi-domain controller (multi-domain controller, MDC), or the like in a vehicle. Optionally, when the probing apparatus and the detection apparatus are independently disposed, communication may be supported between the probing apparatus and the detection apparatus, and a communication link may be in a form of wired link, a wireless link, a wired and wireless combined link, or the like. A communication form is not limited herein.

It should be noted that FIG. 2 is merely an example of an architectural diagram, but a quantity of network elements included in the system shown in FIG. 2 is not limited. Although not shown in FIG. 2, another functional entity may further be included in FIG. 2 in addition to the functional entities shown in FIG. 2. In addition, the method provided in embodiments of this application may be applied to the communication system shown in FIG. 2. Certainly, the method provided in embodiments of this application may also be applied to another communication system. This is not limited in embodiments of this application.

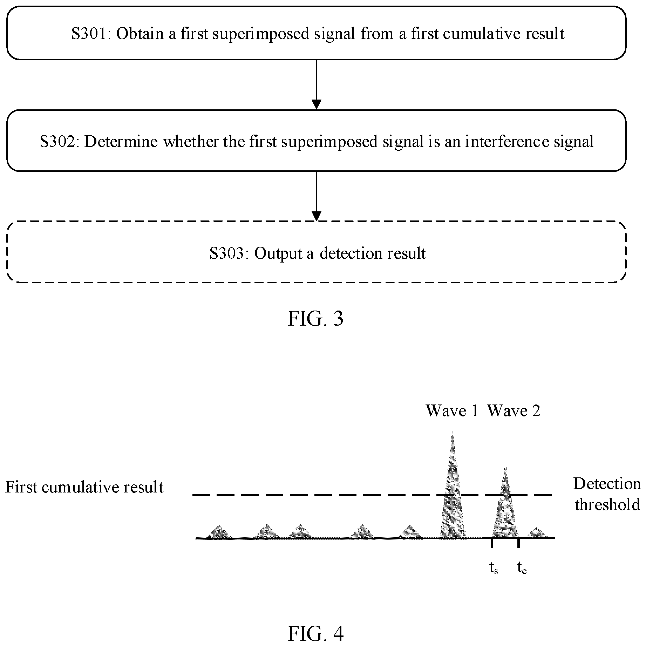

FIG. 3 is a schematic flowchart of an interference signal detection method according to an embodiment of this application. The method may be applied to the detection apparatus in FIG. 2. The method includes but is not limited to the following steps.

S301: Obtain a first superimposed signal from a first cumulative result.

The first cumulative result is obtained by superimposing N return signal measurement results, where N is a positive integer.

In some possible embodiments, the return signal measurement result may also be referred to as a micro event measurement result.

For example, the return signal measurement result may be a time of flight ToF measurement result. The ToF measurement may be understood in a broad sense as a measurement manner of obtaining a distance from a target object to a receive end by measuring time taken by an object, a particle, light, or a wave to travel a specific distance through a fixed medium.

The measurement result may be obtained by performing N return signal measurements initiated to a target object based on a same spatial location (for example, a horizontal angle or a vertical angle), that is, one return signal measurement result is obtained by performing one return signal measurement.

For example, in N return signal measurement results, some return signal measurement results may include signal strength distribution of at least one return signal in the plurality of temporal locations, or may not include any return signal. This is not specifically limited herein.

The return signal may be an optical signal, an ultrasonic signal, or a millimeter wave signal.

For example, refer to FIG. 1. The ToF measurement result is used as an example of the return signal measurement result. FIG. 1 shows n ToF measurement results: ToF_1, ToF_2, ..., and ToF_n. ToF_1 is used as an example. It can be learned that ToF_1 includes signal strength distribution of three return signals in a plurality of temporal locations, that is, one small gray triangle in ToF_1 is one return signal. However, this embodiment of this application does not limit the return signal as being in the form of the small gray triangle in ToF_1.

For example, intervals between start time points of any two adjacent return signal measurements in the N return signal measurements may be equal or unequal. This is not specifically limited herein. Measurement duration corresponding to each return signal measurement may be equal or unequal. This is not specifically limited herein.

For example, before return signal measurement is performed, pulse transmission time and signal receiving time are synchronized, that is, the pulse transmission time is set to 0. In this case, each temporal location may be represented as an offset from corresponding pulse transmission time, that is, the offset is a relative value. Intervals between any two adjacent temporal locations in the plurality of temporal locations are equal.

For example, a quantity of the plurality of temporal locations is related to time measurement resolution of a sensor and measurement duration corresponding to one return signal measurement. For example, assuming that the measurement duration corresponding to one return signal measurement is 2 microseconds ($\mu$s), and time measurement resolution of a lidar sensor is 1 nanosecond (ns), there are 2000 corresponding temporal locations.

It may be understood that measurement duration corresponding to each return signal measurement includes the plurality of temporal locations. The return signal measurement result includes signal strengths detected in the plurality of temporal locations.

In an implementation, the N return signal measurement results may be directly obtained by the detection apparatus (when the detection apparatus is coupled to the probing apparatus shown in FIG. 2), or the N return signal measurement results may be obtained by the detection apparatus from the probing apparatus shown in FIG. 2. The sensor may be an ultrasonic sensor, a lidar sensor, a millimeter-wave radar sensor, or another sensor that calculates a target distance based on a measured return signal. This is not specifically limited herein.

For example, a signal strength corresponding to any temporal location in the first cumulative result may be a sum of signal strengths corresponding to the temporal location in the N return signal measurement results. The signal strength corresponding to the any temporal location in the first cumulative result is greater than or equal to 0. For example, statistics may be collected on the cumulative result by using a histogram or the cumulative result may be displayed by using a histogram.

Herein, the first cumulative result includes signal strength distribution of at least one superimposed signal in the plurality of temporal locations. Optionally, a manner of dividing superimposed signals may be related to a waveform feature of the signal, or a temporal location. For example, the superimposed signals are divided based on the waveform feature of the signal. One superimposed signal may be one pulse signal, one peak signal, one rising edge signal, or the like. The pulse signal is a signal that fluctuates for a short time and resembles a pulsating signal. The peak signal is a signal having a maximum signal strength in a time period. The rising edge signal is a segment of signal whose signal strength continuously increases in a time period. For example, the superimposed signals are divided based on time of the signal. One superimposed signal may be a signal in some temporal locations. For example, based on a time axis, a signal in each preset time range is one superimposed signal.

Signal energy of the first superimposed signal is not less than a detection threshold. It may be understood that the first superimposed signal is included in the at least one superimposed signal in the first cumulative result. A signal strength of the first superimposed signal in a specific temporal location may be a sum of signal strengths corresponding to the temporal location in the N return signal measurement results.

For example, refer to FIG. 1. The superimposed histogram is a representation manner of the first cumulative result. The detection threshold in FIG. 1 is used as an example of the detection threshold. It can be learned from FIG. 1 that the superimposed histogram includes six superimposed signals. In the six superimposed signals, there are two superimposed signals whose signal strengths exceed the detection threshold: a superimposed signal 1 and the superimposed signal 2. In other words, the first superimposed signal may be the superimposed signal 1 or the superimposed signal 2 in FIG. 1.

Herein, the detection threshold is used to obtain the first superimposed signal from the at least one superimposed signal in the first cumulative result. The detection threshold may be preset by a vendor (for example, a lidar sensor vendor), or may be obtained by the detection apparatus based on signal strengths of superimposed signals in the first cumulative result. For example, the detection threshold is obtained by performing summation, averaging, or other calculation processing on the signal strengths of the superimposed signals in the first cumulative result.

For example, the signal energy of the first superimposed signal may be a maximum signal strength (or referred to as a signal strength peak value) of the first superimposed signal, or may be a sum, an average value, or another statistical value of signal strengths of the first superimposed signal.

It may be understood that, when manners of calculating the signal energy of the first superimposed signal are different, corresponding detection thresholds are also different. For example, when the signal energy of the first superimposed signal is the maximum signal strength of the first superimposed signal, the detection threshold is a first detection threshold; or when the signal energy of the first superimposed signal is the sum of the signal strengths of the first superimposed signal, the detection threshold is a second detection threshold. A value of the first detection threshold is not equal to a value of the second detection threshold.

S302: Determine whether the first superimposed signal is an interference signal.

In this embodiment of this application, the first superimposed signal corresponds to a first time range; and determining whether the first superimposed signal is an interference signal is specifically: determining, based on the first time range, whether the first superimposed signal is an interference signal.

Herein, an interference signal may be understood as, for example, an actual interference signal that interferes with a sensor, or a signal with relatively low confidence, a suspected interference signal, or a potential suspicious signal to be further determined. This is not specifically limited herein.

The first time range includes some or all consecutive temporal locations in the plurality of temporal locations.

For example, the first time range includes several temporal locations between a start temporal location corresponding to the first superimposed signal and an end temporal location corresponding to the first superimposed signal. For example, the start temporal location corresponding to the first superimposed signal may be a start moment of a rising edge of the first superimposed signal, and the end temporal location corresponding to the first superimposed signal may be an end moment of a falling edge of the first superimposed signal.

For example, refer to FIG. 4. The first time range is further explained. It can be learned from FIG. 4 that the first cumulative result includes seven superimposed signals, and the first superimposed signal is obtained, for example, based on whether a signal strength peak value of a superimposed signal is greater than or equal to the detection threshold. It can be learned that in the seven superimposed signals, there are two superimposed signals whose signal strength peak values exceed the detection threshold: a wave 1 and a wave 2. That is, the first superimposed signal may be the wave 1 or the wave 2 in FIG. 4. The first time range is described by using an example in which the first superimposed signal is the wave 2. In this case, a start temporal location corresponding to the first superimposed signal is a location $t_s$ in FIG. 4, an end temporal location corresponding to the first superimposed signal is a location $t_e$ in FIG. 4, and the first time range includes temporal locations in a time period from the location $t_s$ to the location $t_e$.

For example, the first time range includes a full set of temporal locations between a $1^{st}$ temporal location corresponding to a signal strength greater than or equal to a target threshold and a last temporal location corresponding to a signal strength greater than or equal to the target threshold in the first superimposed signal (including the $1^{st}$ temporal location and the last temporal location). It may be understood that a time period formed by the $1^{st}$ temporal location and the last temporal location is included in a time period formed by the start temporal location corresponding to the first superimposed signal and the end temporal location corresponding to the first superimposed signal. Optionally, the first time range includes some consecutive temporal locations between the $1^{st}$ temporal location and the last temporal location.

The target threshold may be used to determine the first time range corresponding to the first superimposed signal. The target threshold may be preset, or may be obtained by the detection apparatus based on signal strengths of a superimposed signal in the first cumulative result. For example, the target threshold is obtained by performing median calculation, averaging, or other calculation processing on the signal strengths of the superimposed signal in the first cumulative result. The target threshold is greater than 0, and the target threshold is less than a signal strength peak value of the first superimposed signal.

In this embodiment of this application, based on a time coherence characteristic and a spatial coherence characteristic of the return signal measurement, similarity or consistency of a plurality of return signal measurement results may be measured in a time dimension or a spatial dimension, to implement interference signal detection. The time coherence characteristic means that when a location between a measured target object and a sensor within a preset time interval changes very little or is basically unchanged, a time range corresponding to a target return signal (corresponding to the target object) in a plurality of return signal measurement results within the preset time interval changes very little or is basically unchanged. The spatial coherence characteristic means that a plurality of return signal measurements are performed on a target object in adjacent spatial locations, some or all of light spots corresponding to a plurality of obtained return signal measurement results in the adjacent spatial locations are located on the target object, and light spots corresponding to adjacent return signal measurement results may also partially overlap, meaning that the plurality of return signal measurement results in the adjacent spatial locations are correlated.

The following describes a specific implementation of determining whether a signal is an interference signal.

Case 1: Determined based on a time dimension

Specifically, the N return signal measurement results are located in a same spatial location, for example, at a horizontal angle or at a vertical angle. In the time dimension, whether the first superimposed signal is an interference signal may be determined in two manners: performing difference processing or collecting statistics on a quantity of successful threshold detection times. The following describes the two manners in detail.

(1) Difference processing

In this embodiment of this application, difference processing may be first performed on the N return signal measurement results to obtain a difference result, where the difference result includes signal strength distribution of a plurality of first difference points in the plurality of temporal locations. The determining, based on the first time range, whether the first superimposed signal is an interference signal includes: when a signal strength of a first difference point corresponding to the first time range in the difference result is not less than a first threshold, determining that the first superimposed signal is an interference signal.

Each of the plurality of first difference points corresponds to one temporal location in the plurality of temporal locations. A signal strength of the first difference point in the temporal location is obtained by performing difference processing based on signal strengths corresponding to the temporal location in the N return signal measurement results. It may be understood that a quantity of first difference points in the difference result is equal to a quantity of temporal locations.

Herein, the first threshold may be preset by a vendor based on experience, may be obtained by the detection apparatus based on the signal strengths of the first superimposed signal, or may be obtained by the detection apparatus based on the signal strengths of the superimposed signal in the first cumulative result.

For example, that the signal strength of the first difference point corresponding to the first time range in the difference result is not less than the first threshold is: At least one temporal location exists in the first time range, and a signal strength of the first difference point in the at least one temporal location is not less than the first threshold.

In some possible embodiments, when a signal strength of a first difference point corresponding to each temporal location in the first time range in the difference result is less than the first threshold, it may be considered that the first superimposed signal is not an interference signal, or it may be considered that a probability that the first superimposed signal is an interference signal is relatively low.

Herein, the foregoing difference processing has a plurality of manners. For details, refer to the following Manner 1 to Manner 3.

Manner 1: Performing difference processing directly

A second temporal location is used as an example. If the second temporal location is any one of the plurality of temporal locations, a signal strength of a first difference point corresponding to the second temporal location in the difference result is one of the following cases:

(1) a difference between a maximum value of signal strengths corresponding to the second temporal location and a minimum value of the signal strengths corresponding to the second temporal location in the N return signal measurement results;

(2) a maximum value of a difference between signal strengths corresponding to the second temporal location in each adjacent pairs of return signal measurement results in the N return signal measurement results; or

(3) a variance or a standard deviation of the signal strengths corresponding to the second temporal location in the N return signal measurement results.

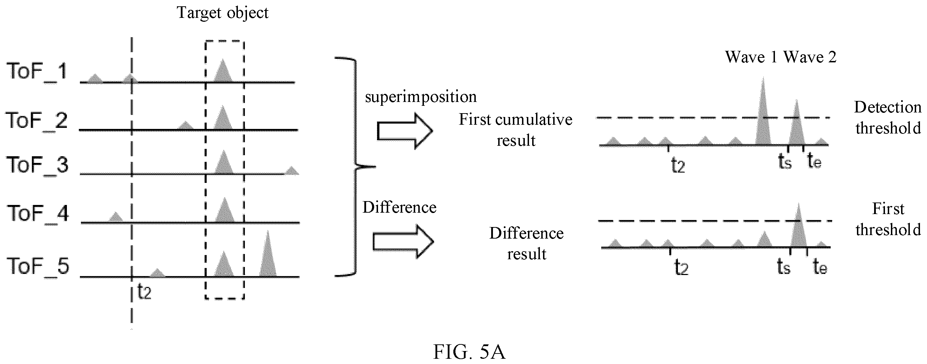

For example, refer to FIG. 5A. A signal strength of the first difference point corresponding to the second temporal location in the difference result is further explained. In FIG. 5A, the ToF measurement is used as an example of the return signal measurement. Assuming that N is 5, the N return signal measurement results are five ToF measurement results: ToF_1, ToF_2, ToF_3, ToF_4, and ToF_5 in FIG. 5A. In FIG. 5A, if $t_2$ represents the second temporal location, a signal strength corresponding to the location $t_2$ in ToF_1 is denoted as $F_1(t_2)$,

and a signal strength corresponding to the location t2 in ToF_2 is denoted as $F_2(t_2)$, a signal strength corresponding to the location t2 in ToF_3 is denoted as $F_3(t_2)$, a signal strength corresponding to the location t2 in ToF_4 is denoted as $F_4(t_2)$, and a signal strength corresponding to the location t2 in ToF_5 is denoted as $F_5(t_2)$. It can be learned from FIG. 5A that $F_2(t_2) = F_3(t_2) = F_4(t_2) = F_5(t_2) = 0$.

For example, when difference processing is calculating a range, in FIG. 5A, a signal strength of the first difference point corresponding to the location $t_2$ in the difference result is a difference between a maximum value and a minimum value in a set $\{F_1(t_2),F_2(t_2),F_3(t_2),F_4(t_2),F_5(t_2)\}$, namely, $F_1(t_2)$.

For example, when difference processing is calculating a maximum value of differences between adjacent ToF measurement results, in FIG. 5A, signal strength differences corresponding to the location $t_2$ between pairs of adjacent ToF measurement results include: $F_1(t_2)-F_2(t_2)$, $F_2(t_2)-F_3(t_2)$, $F_3(t_2)-F_4(t_2)$, and $F_4(t_2)-F_5(t_2)$. Therefore, a signal strength of the first difference point corresponding to the location $t_2$ in the difference result is a maximum value in a set $\{F_1(t_2) - F_2(t_2),F_2(t_2) - F_3(t_2),F_3(t_2) - F_4(t_2),F_4(t_2) - F_5(t_2)\}$, and is denoted as $F_{max}(t_2)$. In some possible embodiments, the signal strength differences corresponding to the location $t_2$ between the pairs of adjacent ToF measurement results include $F_2(t_2)-F_1(t_2)$, $F_3(t_2)-F_2(t_2)$, $F_4(t_2)-F_3(t_2)$, and $F_5(t_2)-F_4(t_2)$. This is not specifically limited herein. It may be understood that, after the signal strength differences corresponding to the location $t_2$ between the pairs of adjacent ToF measurement results are obtained, absolute value processing may be first performed.

For example, when difference processing is calculating a standard deviation of the signal strengths, in FIG. 5A, the signal strength of the first difference point corresponding to the location $t_2$ in the difference result may be obtained by calculating a standard deviation of values in the set $\{F_1(t_2),F_2(t_2),F_3(t_2),F_4(t_2),F_5(t_2)\}$, and the obtained standard deviation is denoted as $F_{std}(t_2)$.

For example, when difference processing is calculating a variance of the signal strengths, in FIG. 5A, the signal strength of the first difference point corresponding to the location $t_2$ in the difference result may be obtained by calculating a variance of values in the set $\{F_1(t_2),F_2(t_2),F_3(t_2),F_4(t_2),F_5(t_2)\}$, and the obtained variance is denoted as $F_{var}(t_2)$.

In some possible embodiments, the signal strength of the first difference point corresponding to the second temporal location in the difference result may alternatively be a ratio of a statistical value of the differences corresponding to the second temporal location to signal energy of a superimposed signal corresponding to the second temporal location in the first cumulative result (when there is a superimposed signal corresponding to the second temporal location in the first cumulative result). It may be understood that, when no superimposed signal corresponds to the second temporal location in the first cumulative result, the ratio may be denoted as 0.

For example, the signal energy of the superimposed signal corresponding to the second temporal location in the first cumulative result may be a signal strength corresponding to the second temporal location in the first cumulative result, or may be a sum, an average value, or the like of signal strengths of the superimposed signal corresponding to the second temporal location in the first cumulative result.

The statistical value of the differences corresponding to the second temporal location may be the maximum value of the differences corresponding to the second temporal location, for example, the foregoing $F_{max}(t_2)$, may be the standard deviation of the signal strengths corresponding to the second temporal location, for example, the foregoing $F_{std}(t_2)$, or may be the variance of the signal strengths corresponding to the second temporal location, for example, the foregoing $F_{var}(t_2)$. This is not specifically limited herein.

It should be noted that, in addition to the foregoing manners of calculating the range, calculating the maximum value of the difference between the signal strengths corresponding to the adjacent temporal locations, calculating the standard deviation of the signal strengths, and calculating the variance of the signal strengths, the difference calculation manner may be another manner that may be used to calculate the differences corresponding to the plurality of return signal measurement results. This is not specifically limited herein.

For example, refer to FIG. 5A. The first superimposed signal may be a wave 1 or a wave 2 in FIG. 5A. It can be learned that the wave 1 is a target superimposed signal corresponding to the target object, but the wave 2 is an interference signal that may be mistakenly detected as the target superimposed signal. In FIG. 5A, it is assumed that the first superimposed signal obtained based on the first cumulative result is the wave 2, the first time range corresponds to a time period from a location $t_s$ to a location $t_e$ in FIG. 5A, and the first time range includes temporal locations in the time period from the location $t_s$ to the location $t_e$ in FIG. 5A. It can be learned that, in the difference result shown in FIG. 5A, a signal strength of the first difference point corresponding to a specific temporal location in the first time range exceeds the first threshold, and therefore, it is determined that the wave 1 is an interference signal. In this case, the interference signal is identified.

Manner 2: Performing grouping, superimposition, and then difference processing

In this embodiment of this application, the N return signal measurement results may be first grouped to obtain K groups of measurement results. Each of the K groups of measurement results includes Q adjacent return signal measurement results in the N return signal measurement results, and Q and K are positive integers less than N. Return signal measurement results in each of the K groups of measurement results are superimposed to obtain K superimposed results. Difference processing is performed on the K superimposed results to obtain the difference result.

In other words, quantities of return signal measurement results included in each of the K groups of measurement results are the same, and the return signal measurement results included in each group of measurement results are adjacent.

Herein, for a process of performing difference processing on the K superimposed results, refer to the description about difference processing in Manner 1. A difference lies in that an operation object of difference processing is not the N return signal measurement results in Manner 1, but the K superimposed results herein.

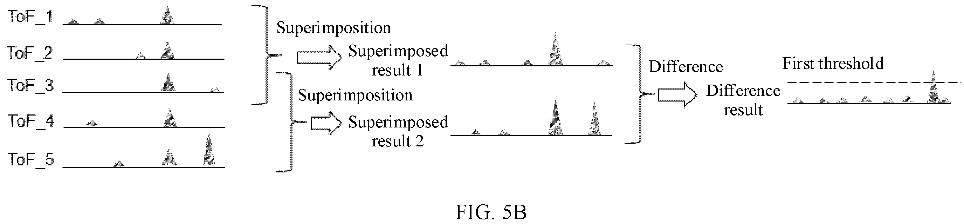

Refer to FIG. 5B. The ToF measurement is used as an example of the return signal measurement. Assuming that N is 5, the N return signal measurement results are five ToF measurement results: ToF_1, ToF_2, ToF_3, ToF_4, and ToF_5 in FIG. 5B. In FIG. 5B, the five ToF measurement results are divided into two groups, and there are three ToF measurement results included in each group. A first group includes ToF_1, ToF_2, and ToF_3, and a second group includes ToF_3, ToF_4, and ToF_5. The ToF measurement results in the first group are superimposed to obtain a superimposed result 1, the ToF measurement results in the second group are superimposed to obtain a superimposed result 2, and finally difference processing is performed on the superimposed result 1 and the superimposed result 2 to obtain the difference result.

It should be noted that FIG. 5B merely provides an example of a grouping manner. In this embodiment of this application, the grouping manner is not limited to the form shown in FIG. 5B.

For example, the five ToF measurement results shown in FIG. 5B may be further grouped in the following three manners. Refer to the grouping manners 1 to 3.

Grouping manner 1: K=4 and Q=2, that is, the ToF measurement results are divided into four groups, and there are two ToF measurement results included in each group. Specifically, a group 1 includes ToF_1 and ToF_2, a group 2 includes ToF_2 and ToF_3, a group 3 includes ToF_3 and ToF_4, and a group 4 includes ToF_4 and ToF_5.

Grouping manner 2: K=3 and Q=3, that is, the ToF measurement results are divided into three groups, and there are three ToF measurement results included in each group. Specifically, a group 1 includes ToF_1, ToF_2, and ToF_3, a group 2 includes ToF_2, ToF_3, and ToF_4, and a group 3 includes ToF_3, ToF_4, and ToF_5.

Grouping manner 3: K=2 and Q=4, that is, the ToF measurement results are divided into two groups, and there are four ToF measurement results included in each group. Specifically, a group 1 includes ToF_1, ToF_2, ToF_3, and ToF_4, and a group 2 includes ToF_2, ToF_3, ToF_4, and ToF_5.

It can be learned that, in the foregoing grouping manners, two adjacent groups include a same ToF measurement result. In some possible embodiments, after grouping, two adjacent groups may alternatively not include a same ToF measurement result. For example, when N is an even number, for example, N=4, assuming that four ToF measurement results are ToF_1, ToF_2, ToF_3, and ToF_4, the four ToF measurement results may be further divided into two groups, where a group 1 includes ToF_1 and ToF_2, and a group 2 includes ToF_3 and ToF_4.

In some possible embodiments, it is also possible to not limit each of the K sets of measurement results to include a same quantity of return signal measurement results. For example, the five ToF measurement results shown in FIG. 5B are divided into three groups. A group 1 includes only ToF_1, a group 2 includes ToF_2 and ToF_3, and a group 3 includes ToF_4 and ToF_5. In this case, to ensure accuracy of a degree of difference, each group may include a same quantity of ToF measurement results. Because there are both two ToF measurement results included in the group 2 and the group 3, however, there is one ToF measurement results in the group 1. Therefore, superimposing ToF_1 in the group 1 is multiplying signal strengths corresponding to temporal locations in ToF_1 by 2.

Manner 3: Perform grouping and difference processing, and then collecting statistics

In this embodiment of this application, the N return signal measurement results may be first grouped to obtain K groups of measurement results. Each of the K groups of measurement results includes Q adjacent return signal measurement results in the N return signal measurement results, and Q and K are positive integers less than N. Difference processing is performed on each of the K groups of measurement results, to obtain K initial difference results; and statistics are collected on the K initial difference results, to obtain the difference result.

For example, statistical processing includes but is not limited to summation, averaging, or calculating a maximum value.

Herein, that difference processing is performed on each group of measurement results means performing difference processing on the Q return signal measurement results in each group of measurement results. For a process of difference processing, refer to the descriptions about difference processing in Manner 1. A difference lies in that an operation object of difference processing is not the N return signal measurement results in Manner 1, but the Q return signal measurement results herein.

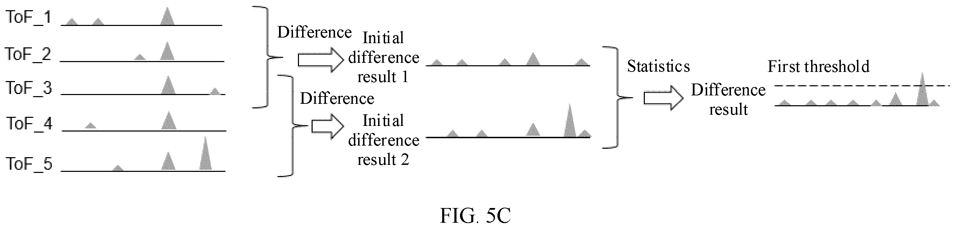

Refer to FIG. 5C. The ToF measurement is used as an example of the return signal measurement. Assuming that N is 5, the N return signal measurement results are five ToF measurement results: ToF_1, ToF_2, ToF_3, ToF_4, and ToF_5 in FIG. 5C. In FIG. 5C, the five ToF measurement results are divided into two groups, and there are three ToF measurement results included in each group. A first group includes ToF_1, ToF_2, and ToF_3, and a second group includes ToF_3, ToF_4, and ToF_5. Difference processing is performed on the ToF measurement results in the first group to obtain an initial difference result 1, difference processing is performed on the ToF measurement results in the second group to obtain an initial difference result 2, and finally statistical processing is performed on the initial difference result 1 and the initial difference result 2 to obtain the difference result.

In FIG. 5C, any temporal location in a plurality of temporal locations, for example, the second temporal location, is used as an example. A signal strength of a difference point corresponding to the second temporal location in the initial difference result 1 is denoted as f1, and a signal strength of a difference point corresponding to the second temporal location in the initial difference result 2 is denoted as f2. If the foregoing statistical processing is summation, a signal strength of the first difference point corresponding to the second temporal location in the difference result is (f1 + f2) in FIG. 5C. If statistical processing is averaging, the signal strength of the first difference point corresponding to the second temporal location in the difference result in FIG. 5C is ($\frac{f1+f2}{2}$). If the statistical processing is calculating a maximum value, the signal strength of the first difference point corresponding to the second temporal location in the difference result in FIG. 5C is $\{f1, f2\}_{max}$.

It should be noted that FIG. 5C merely provides an example of a grouping manner. In this embodiment of this application, the grouping manner is not limited to the form shown in FIG. 5C. In some possible embodiments, there may be another grouping manner. For details, refer to the related descriptions of the grouping manner in Manner 2. Details are not described herein again.

In the foregoing difference processing manner, the difference result obtained by performing difference processing on the N return signal measurement results includes signal strength distribution of a plurality of first difference points in all temporal locations. However, because this embodiment of this application mainly focuses on the signal strength of the first difference point corresponding to the first time range, in some possible embodiments, when difference processing is performed, difference processing may alternatively be performed only on a signal strength of a return signal corresponding to the first time range in the N return signal measurement results (for a calculation manner of difference processing, refer to the description about the difference processing in Manner 1), to directly obtain the signal strength of the first difference point corresponding to the first time range, instead of obtaining the signal strength of the first difference point corresponding to the first time range by searching the difference result. In this way, an amount of data involved in difference processing is greatly reduced, and data processing efficiency is improved, helping improve interference signal detection efficiency.

It should be understood that Manner 1 to Manner 3 are examples for descriptions for ease of understanding, and more manners may be included in a specific implementation process. Details are not described herein. The foregoing cases may also be combined in a non-mutually exclusive case, and a combination case is not described herein again.

(2) Collecting statistics on a quantity of successful threshold detection times

In this embodiment of this application, each of K groups of measurement results is superimposed to obtain K superimposed results, where each of the K superimposed results includes signal strength distribution of at least one second superimposed signal in the plurality of temporal locations, each of the K groups of measurement results includes Q adjacent return signal measurement results in the N return signal measurement results, and both Q and K are positive integers less than N. The determining, based on the first time range, whether the first superimposed signal is an interference signal includes: determining, in the K superimposed results, a first statistical count of superimposed results in which signal energy that is of a second superimposed signal and that corresponds to the first time range exceeds a second threshold. When the first statistical count is less than a third threshold, it is determined that the first superimposed signal is an interference signal.

In other words, quantities of return signal measurement results included in each of the K groups of measurement results are the same, and the return signal measurement results included in each group of measurement results are adjacent. In some possible embodiments, a same quantity of return signal measurement results included in each group of measurement results may be not limited. For a specific grouping manner, refer to the related descriptions of the grouping manner in Manner 2. Details are not described herein again.

Herein, the second threshold may be preset, or may be dynamically set by the detection apparatus based on the superimposed result. Second thresholds corresponding to different superimposed results may be the same or different. A superimposed result 1 of the K superimposed results is used as an example. A second threshold corresponding to the superimposed result 1 may be an average value of signal strengths of the second superimposed signal in the superimposed result 1, or may be obtained by performing weighted summation on the signal strengths of the second superimposed signal in the superimposed result 1, or the like.

Correspondingly, the third threshold may be preset by a vendor, or may be obtained by the detection apparatus based on a sum of statistical quantities of second superimposed signals whose signal energy exceeds the second threshold in the K superimposed results. The third threshold is less than or equal to K. For example, the first statistical count may be understood as a statistical value of a quantity of superimposed results that meet a first threshold detection condition in the K superimposed results, that is, a quantity of successful threshold detection times. That the superimposed results meet the first threshold detection condition means that the signal energy of the second superimposed signal corresponding to the first time range in the superimposed result exceeds the second threshold.

In an implementation, that the signal energy of the second superimposed signal corresponding to the first time range in the superimposed result exceeds the second threshold may be: A maximum signal strength of the second superimposed signal corresponding to the first time range in the superimposed result exceeds the second threshold.

In an implementation, that the signal energy of the second superimposed signal corresponding to the first time range in the superimposed result exceeds the second threshold may be: A statistical value of signal strengths of the second superimposed signal corresponding to the first time range in the superimposed result exceeds the second threshold, where the statistical value of the signal strengths of the second superimposed signal may be a sum, an average value, or the like of the signal strengths of the second superimposed signal.

In some possible embodiments, that the superimposed results meet the first threshold detection condition may also be: A quantity of temporal locations corresponding to signal strengths that exceed a preset strength threshold for the second superimposed signal corresponding to the first time range in the superimposed result exceeds the second threshold.

For example, the first statistical count may also be understood as a quantity of second superimposed signals whose signal energy exceeds the second threshold and that correspond to the first time range in the K superimposed results.

In some possible embodiments, when the first statistical count is greater than or equal to the third threshold, it may be considered that the first superimposed signal is not an interference signal, or it may be considered that a probability that the first superimposed signal is an interference signal is relatively low.

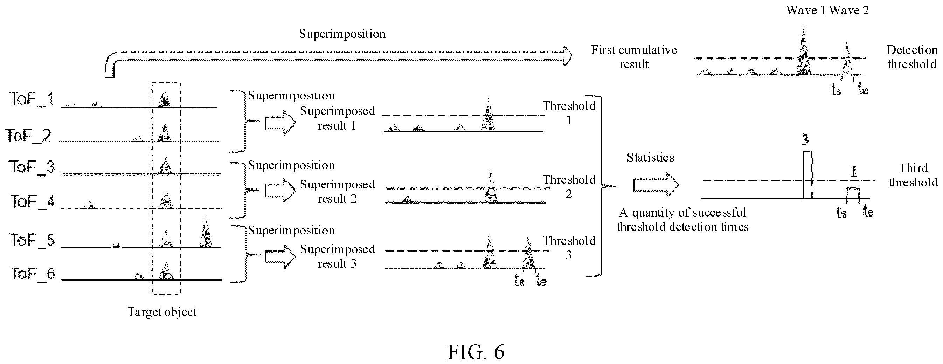

The following specifically describes, based on FIG. 6, a process of determining, based on the quantity of successful threshold detection times, that the first superimposed signal is an interference signal.

In FIG. 6, the ToF measurement is used as an example of the return signal measurement. Assuming that N is 6, the N return signal measurement results are six ToF measurement results: ToF_1, ToF_2, ToF_3, ToF_4, ToF_5, and ToF_6 in FIG. 6.

The six ToF measurement results are superimposed to obtain a first cumulative result. It may be determined, based on the detection threshold, that the first superimposed signal may be a wave 1 or a wave 2 in the first cumulative result shown in FIG. 6. For example, the first superimposed signal is the wave 2, and then the first time range is a time period from a location $t_s$ to a location $t_e$.

In addition, the six ToF measurement results are grouped and then separately superimposed. For example, the six ToF measurement results are divided into three groups, and there are two ToF measurement results included in each group. A group 1 includes ToF_1 and ToF_2, a group 2 includes ToF_3 and ToF_4, and a group 3 includes ToF_5 and ToF_6. ToF_1 and ToF_2 in the group 1 are superimposed to obtain a superimposed result 1. Correspondingly, the group 2 is superimposed to obtain a superimposed result 2, and the group 3 is superimposed to obtain a superimposed result 3.

For example, that the superimposed results meet the first threshold detection condition is that the maximum signal strength of the second superimposed signal corresponding to the first time range in the superimposed result is greater than the second threshold. A second threshold in the superimposed result 1 may be a threshold 1 shown in FIG. 6 (for example, the threshold 1 may be obtained based on the superimposed result 1). A second threshold in the superimposed result 2 may be a threshold 2 shown in FIG. 6 (for example, the threshold 2 may be obtained based on the superimposed result 2). A second threshold in the superimposed result 3 may be a threshold 3 shown in FIG. 6 (for example, the threshold 3 may be obtained based on the superimposed result 3). It can be learned that no superimposed signal corresponds to the first time range in the superimposed result 1, no superimposed signal corresponds to the first time range in the superimposed result 2, and a maximum signal strength of a superimposed signal corresponding to the first time range in the superimposed result 3 exceeds the threshold 3. In other words, for the first time range, threshold detection failures occur in both the superimposed result 1 and the superimposed result 2, and threshold detection success occurs in the superimposed result 3. Therefore, the first statistical count is 1. It can be learned from FIG. 6 that the first statistical count is less than the third threshold, and therefore it is determined that the wave 2 (the first superimposed signal) is an interference signal.

It should be noted that the grouping manner in the embodiment in FIG. 6 is merely an example, and the grouping manner is not limited to the form shown in FIG. 6.

In some possible embodiments, confidence information may be further obtained based on the first statistical count, and the confidence information indicates confidence that the first superimposed signal is an interference signal.

For example, when the first statistical count is a first value, confidence that the first superimposed signal is an interference signal is a first probability; or when the first statistical count is a second value, confidence that the first superimposed signal is an interference signal is a second probability, where both the first value and the second value are less than the third threshold.

Further, if the first value is less than the second value, the first probability is greater than the second probability; or if the first value is greater than the second value, the first probability is less than the second probability. It may be understood that a smaller first statistical count indicates a higher probability that the first superimposed signal is an interference signal.

In other words, when it is detected that the first superimposed signal is an interference signal, corresponding confidence, for example, the first probability and the second probability, may be further provided. Herein, only examples of the two confidence values are provided, but a quantity of confidence values is not limited in this embodiment of this application. It may be understood that the probability that the first superimposed signal is a potential interference signal is represented by using the confidence, to provide a reference for a back end, helping improve back-end data processing efficiency.

In some possible embodiments, the confidence may also be divided by using a range. For example, when the first statistical count is less than or equal to a first preset threshold, the confidence that the first superimposed signal is an interference signal is the first probability; or when the first statistical count is greater than a first preset threshold and less than a second preset threshold, the confidence that the first superimposed signal is an interference signal is the second probability.

Case 2: Determined based on a spatial dimension

For example, a sensor is a lidar. When measuring a return signal, the lidar may measure the return signal in a horizontal direction, a vertical direction, or another angle direction. A detection angle in the horizontal direction may be referred to as a horizontal angle, and a detection angle in the vertical direction may be referred to as a vertical angle. One horizontal angle or one vertical angle may also be referred to as one spatial location or one angle location. At least one ToF measurement may be initiated in one spatial location, to obtain at least one ToF measurement result.

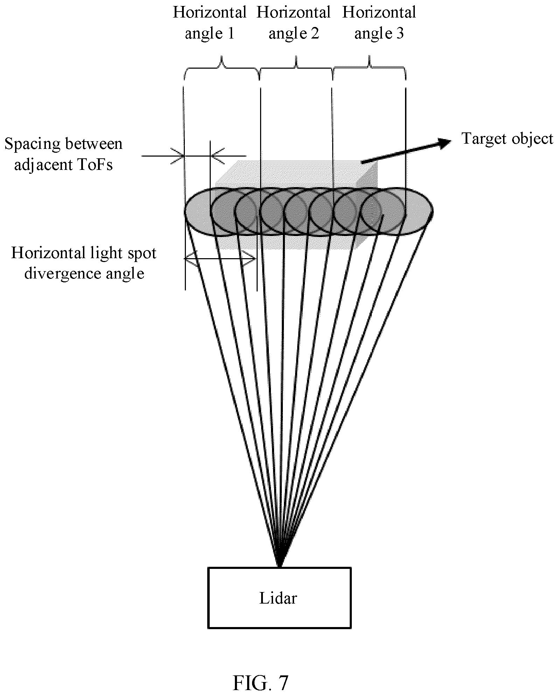

FIG. 7 is a diagram of measuring a return signal according to an embodiment of this application. It can be learned that, in FIG. 7, three ToF measurements are performed at one horizontal angle (a quantity of ToF measurements performed at one horizontal angle is not limited in this application), some or all of light spots corresponding to the three horizontal angles are located on a target object shown in FIG. 7, light spots corresponding to adjacent ToF measurements overlap to some extent., and light spots corresponding to adjacent horizontal angles also partially overlap. A horizontal angle 1 is adjacent to a horizontal angle 2, and the horizontal angle 2 is adjacent to a horizontal angle 3.

Because some or all of light spots corresponding to adjacent spatial locations are located on a same target object, and the light spots corresponding to the adjacent spatial locations may also partially overlap, it indicates that ToF measurement results of the adjacent spatial locations are also correlated. Therefore, the ToF measurement results of the adjacent locations may be processed in the spatial dimension to implement interference signal detection.

In some possible embodiments, the N return signal measurement results correspond to a first spatial location, and M return signal measurement results in a second spatial location adjacent to the first spatial location may be obtained, where M is a positive integer less than or equal to N, and the determining, based on the first time range, whether the first superimposed signal is an interference signal includes: determining, based on the first time range and the M return signal measurement results, whether the first superimposed signal is an interference signal.

Herein, that the N return signal measurement results correspond to the first spatial location means that the N return signal measurement results are obtained by performing measurement in the first spatial location.

For example, that the first spatial location is adjacent to the second spatial location may be understood as follows: The first spatial location and the second spatial location may be two adjacent angles in the horizontal direction, two adjacent angles in the vertical direction, or two adjacent angles in another direction. This is not specifically limited herein.

The following further describes adjacency of the second spatial location and the first spatial location based on FIG. 7. For example, when the first spatial location is the horizontal angle 2 shown in FIG. 7, the second spatial location may be a previous adjacent angle of the first spatial location, for example, the horizontal angle 1, or the second spatial location may be a next adjacent angle of the first spatial location, for example, the horizontal angle 3. In this embodiment of this application, the first spatial location and the second spatial location are not limited to only horizontal angles. In some possible embodiments, the first spatial location and the second spatial location may be adjacent vertical angles or other angles.

Herein, the M return signal measurement results in the second spatial location may be selected from the N return signal measurement results in the second spatial location based on a preset angle threshold. For example, the M return signal measurement results may be obtained from a range that is in the second spatial location and that is one preset angle threshold away from the first spatial location.

For example, refer to FIG. 7. The first spatial location is the horizontal angle 2 and the second spatial location is the horizontal angle 1. It can be learned that there are three ToF measurements in the second spatial location, and ToF measurement results corresponding to two ToF measurements that are relatively close to the horizontal angle 2 may be selected from the three ToF measurements, that is, the two ToF measurement results are obtained from the horizontal angle 1.

In an implementation, interference signal detection may be implemented based on a quantity of successful threshold detection times, that is, the determining, based on the first time range and the M return signal measurement results, whether the first superimposed signal is an interference signal includes: grouping the M return signal measurement results, and superimposing grouped return signal measurement results to obtain P superimposed results, where each of the P superimposed results includes signal strength distribution of at least one third superimposed signal in the plurality of temporal locations, and P is a positive integer less than M; determining, in the P superimposed results, a second statistical count of superimposed results in which signal energy that is of a third superimposed signal and that corresponds to the first time range exceeds a fourth threshold; and when the second statistical count is less than a fifth threshold, determine that the first superimposed signal is an interference signal.

For example, the M return signal measurement results correspond to P groups, each of the P groups of measurement results includes L adjacent return signal measurement results in the M return signal measurement results, and both L and P are positive integers less than or equal to M. Each of the P groups of measurement results is superimposed, to obtain the P superimposed results. In some possible embodiments, a same quantity of return signal measurement results included in each group of measurement results may be not limited. For a specific grouping manner of the M return signal measurement results, refer to the descriptions about the grouping manner in Manner 2. Details are not described herein again.

Herein, the fourth threshold may be preset by a vendor, or may be dynamically set by the detection apparatus based on the superimposed result. Fourth thresholds corresponding to different superimposed results may be the same or different. A superimposed result 2 of the P superimposed results is used as an example. A fourth threshold corresponding to the superimposed result 2 may be an average value of signal strengths of the third superimposed signal in the superimposed result 2, or may be obtained by performing weighted summation on the signal strengths of the third superimposed signal in the superimposed result 2, or the like.

The fifth threshold may be preset by a vendor, or may be obtained by the detection apparatus based on a sum of statistical quantities of third superimposed signals whose signal energy exceeds the fourth threshold in the P superimposed results. The fifth threshold is less than or equal to P.

For example, the second statistical count may be understood as a statistical value of a quantity of superimposed results that meet a second threshold detection condition in the P superimposed results, that is, a quantity of successful threshold detection times. That the superimposed results meet the second threshold detection condition means that the signal energy of the third superimposed signal corresponding to the first time range in the superimposed result exceeds the fourth threshold.

In an implementation, that the signal energy of the third superimposed signal corresponding to the first time range in the superimposed result exceeds the fourth threshold may be: A maximum signal strength of the third superimposed signal corresponding to the first time range in the superimposed result exceeds the fourth threshold.

In an implementation, that the signal energy of the third superimposed signal corresponding to the first time range in the superimposed result exceeds the fourth threshold may be: A statistical value of signal strengths of the third superimposed signal corresponding to the first time range in the superimposed result exceeds the fourth threshold, where the statistical value of the signal strengths of the third superimposed signal may be a sum, an average value, or the like of the signal strengths of the third superimposed signal. This is not specifically limited herein.

In some possible embodiments, that the superimposed results meet the second threshold detection condition may also be: A quantity of temporal locations corresponding to signal strengths that exceed a preset strength threshold for the third superimposed signal corresponding to the first time range in the superimposed result exceeds the fourth threshold.

For example, the second statistical count may also be understood as a quantity of third superimposed signals whose signal energy exceeds the fourth threshold and that correspond to the first time range in the P superimposed results.

In some possible embodiments, when the second statistical count is greater than or equal to the fifth threshold, it may be considered that the first superimposed signal is not an interference signal, or it may be considered that a probability that the first superimposed signal is an interference signal is relatively low.

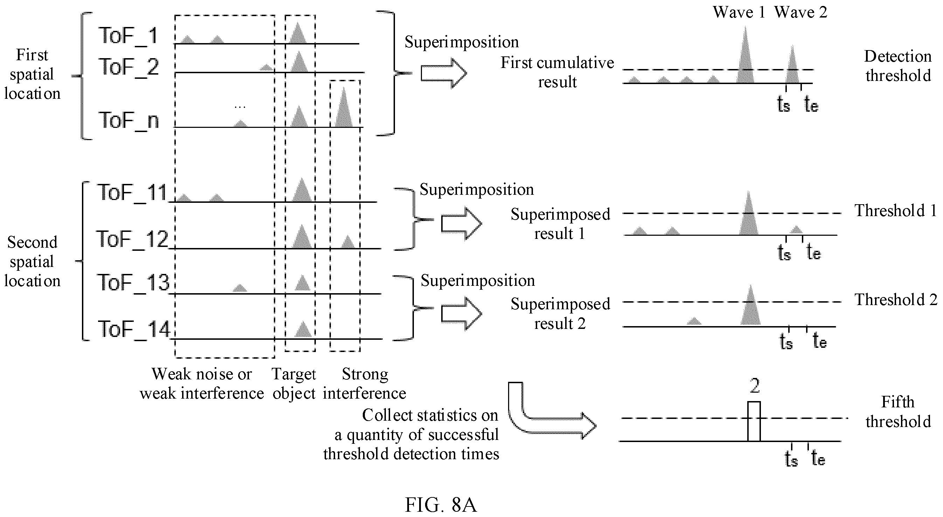

Refer to FIG. 8A. The following specifically describes, in a dimension of adjacent spatial locations, a process of determining, based on a quantity of successful threshold detection times, that the first superimposed signal is an interference signal.

In FIG. 8A, the ToF measurement is used as an example of the return signal measurement. N ToF measurement results are selected from the first spatial location, and four ToF measurement results (that is, M=4), namely, ToF_11, ToF_12, ToF_13, and ToF_14, are selected from the second spatial location adjacent to the first spatial location. The N ToF measurement results in the first spatial location are superimposed to obtain a first cumulative result. It may be determined, based on the detection threshold, that the first superimposed signal may be a wave 1 or a wave 2 in the first cumulative result shown in FIG. 8A. For example, the first superimposed signal is the wave 2, and then the first time range is a time period from a location $t_s$ to a location $t_e$. The four ToF measurement results in the second spatial location are grouped and superimposed to collect statistics on a quantity of successful threshold detection times corresponding to the first time range. For example, the four ToF measurement results are grouped. A group 1 includes ToF_11 and ToF_12, and a group 2 includes ToF_13 and ToF_14. ToF_11 and ToF_12 in the group 1 are superimposed to obtain a superimposed result 1 shown in FIG. 8A. Correspondingly, the group 2 is superimposed to obtain a superimposed result 2 shown in FIG. 8A.

In FIG. 8A, for example, that the superimposed results meet the second threshold detection condition is that the maximum signal strength of the second superimposed signal corresponding to the first time range in the superimposed result is greater than the fourth threshold. A fourth threshold in the superimposed result 1 may be a threshold 1 shown in FIG. 8A (for example, the threshold 1 may be obtained based on the superimposed result 1). A fourth threshold in the superimposed result 2 may be a threshold 2 shown in FIG. 8A (for example, the threshold 2 may be obtained based on the superimposed result 2). It can be learned that a maximum signal strength of a superimposed signal corresponding to the first time range in the superimposed result 1 does not exceed the threshold 1, and no superimposed signal corresponds to the first time range in the superimposed result 2. In other words, for the first time range, threshold detection failures occur in both the superimposed result 1 and the superimposed result 2, and a quantity of successful threshold detection times corresponding to the first time range in FIG. 8A is 0, and therefore the second statistical count is 0. It can be learned from FIG. 8A that the second statistical count is less than the fifth threshold, and therefore it is determined that the wave 2 (the first superimposed signal) is an interference signal.

It should be noted that the grouping manner in the embodiment in FIG. 8A is merely an example, and the grouping manner is not limited to the form shown in FIG. 8A.

Further, when it is determined that the first superimposed signal is an interference signal, confidence information may be further obtained based on the second statistical count, and the confidence information indicates confidence that the first superimposed signal is an interference signal.

For example, when the second statistical count is a first value, confidence that the first superimposed signal is an interference signal is a first probability; or when the second statistical count is a second value, confidence that the first superimposed signal is an interference signal is a second probability, where the first value is less than the second value, the second value is less than the fifth threshold, and the first probability is greater than the second probability. **In** other words, a smaller second statistical count indicates higher confidence that the first superimposed signal is an interference signal.

It should be noted that, for the first probability and the second probability, two confidence values are merely provided as an example herein, but this embodiment of this application does not limit the two confidence values. It may be understood that, the confidence information may provide a reference for back-end processing, helping improve back-end data processing efficiency.

In some possible embodiments, a range of the second statistical count may be also determined, to obtain the confidence information. For example, when the second statistical count is less than or equal to a first preset threshold, the confidence that the first superimposed signal is an interference signal is the first probability; or when the second statistical count is greater than a first preset threshold and less than a second preset threshold, the confidence that the first superimposed signal is an interference signal is the second probability.

In another implementation, interference signal detection may be implemented based on signal energy statistics, that is, the determining, based on the first time range and the M return signal measurement results, whether the first superimposed signal is an interference signal includes: superimposing the M return signal measurement results to obtain a second cumulative result, where the second cumulative result includes signal strength distribution of at least one fourth superimposed signal in the plurality of temporal locations; and when signal energy of a fourth superimposed signal corresponding to the first time range in the second cumulative result is less than a sixth threshold, determining that the first superimposed signal is an interference signal.

Herein, in the M return signal measurement results, some return signal measurement results may include signal strength distribution of at least one return signal in the plurality of temporal locations, or may not include any return signal. This is not specifically limited herein. For details of the return signal, refer to the related descriptions of the return signal in S301. This is not specifically limited herein.

For example, a signal strength corresponding to any temporal location in the second cumulative result is a sum of signal strengths corresponding to the temporal location in the M return signal measurement results. The signal strength corresponding to the any temporal location in the second cumulative result is greater than or equal to 0.

Herein, the sixth threshold may be preset by a vendor, may be obtained by the detection apparatus based on signal energy of the fourth superimposed signal in the second cumulative result, or may be obtained based on signal energy of the superimposed signal in the first cumulative result.

For example, signal energy of the fourth superimposed signal corresponding to the first time range in the second cumulative result may be a maximum signal strength of the fourth superimposed signal, or may be a sum, an average value, or another statistical value of signal strengths of the fourth superimposed signal. It may be understood that, when manners of calculating the signal energy of the fourth superimposed signal are different, corresponding sixth thresholds are also different.

In some possible embodiments, when the signal energy of the fourth superimposed signal corresponding to the first time range in the second cumulative result is greater than or equal to the sixth threshold, it may be considered that the first superimposed signal is not an interference signal, or it may be considered that a probability that the first superimposed signal is an interference signal is relatively low.

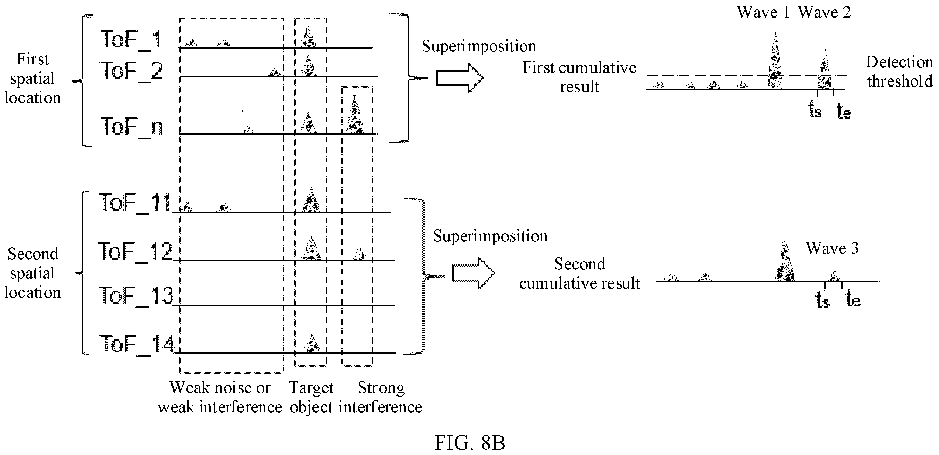

Refer to FIG. 8B. The following specifically describes, in a dimension of adjacent spatial locations, a process of determining, based on signal energy statistics, that the first superimposed signal is an interference signal.

In FIG. 8B, the ToF measurement is used as an example of the return signal measurement. N ToF measurement results are selected from the first spatial location, and four ToF measurement results (that is, M=4), namely, ToF_11, ToF_12, ToF_13, and ToF_14, are selected from the second spatial location adjacent to the first spatial location. It can be learned from FIG. 8B that ToF_11 includes signal strength distribution of three return signals in the plurality of temporal locations, ToF_13 does not include any return signal. The N ToF measurement results in the first spatial location are superimposed to obtain a first cumulative result. It may be determined, based on the detection threshold, that the first superimposed signal may be a wave 1 or a wave 2 in the first cumulative result shown in FIG. 8B. For example, the first superimposed signal is the wave 2, and then the first time range is a time period from a location $t_s$ to a location $t_e$. The four ToF measurement results in the second spatial location are superimposed to obtain a second cumulative result. It can be learned from FIG. 8B that the second cumulative result includes four fourth superimposed signals. Signal energy of a fourth superimposed signal (that is, a wave 3 in FIG. 8B) corresponding to the first time range in the second cumulative result is calculated. When the signal energy is less than the sixth threshold, it is determined that the wave 2 (the first superimposed signal) is an interference signal.

Further, confidence information may also be obtained based on the signal energy of the fourth superimposed signal corresponding to the first time range in the second cumulative result, and the confidence information indicates confidence that the first superimposed signal is an interference signal.

In some possible embodiments, the confidence information may also be obtained based on the signal energy of the fourth superimposed signal corresponding to the first time range in the second cumulative result and the signal energy of the first superimposed signal. For example, the confidence is a weighted difference between the signal energy of the fourth superimposed signal corresponding to the first time range in the second cumulative result and the signal energy of the first superimposed signal.

In some possible embodiments, in the spatial dimension, interference signal detection may be implemented by using the quantity of successful threshold detection times or the signal energy statistics, or may be implemented by difference processing.

For example, the determining, based on the first time range and the M return signal measurement results, whether the first superimposed signal is an interference signal includes: performing difference processing on the M return signal measurement results to obtain a target difference result, where the target difference result includes signal strength distribution of a plurality of second difference points in the plurality of temporal locations; and when a signal strength of a second difference point corresponding to the first time range in the target difference result is not less than a seventh threshold, determining that the first superimposed signal is an interference signal.

Each of the plurality of second difference points corresponds to one temporal location in the plurality of temporal locations. A signal strength of the second difference point in the temporal location is obtained by performing difference processing based on signal strengths corresponding to the temporal location in the M return signal measurement results. The signal strength of the second difference point in the temporal location is not less than 0. It may be understood that a quantity of second difference points in the target difference result is equal to a quantity of temporal locations.

That the signal strength of the second difference point corresponding to the first time range is not less than the seventh threshold may be: For example, at least one temporal location exists in the first time range, and a signal strength of the second difference point in the at least one temporal location is not less than the seventh threshold.

Herein, the seventh threshold may be preset by a vendor, may be obtained by the detection apparatus based on statistics on the signal strengths of the first superimposed signal, or may be obtained based on statistics on the signal strengths of the superimposed signal in the first cumulative result.

Herein, there are a plurality of manners of performing difference processing on the M return signal measurement results. For example, difference processing is directly performed on the M return signal measurement results. For details, refer to the related descriptions in Manner 1. For example, the M return signal measurement results are first grouped and superimposed, and then difference processing is performed. For details, refer to the related descriptions in Manner 2. For example, the M return signal measurement results are first grouped and then difference processing is performed, and statistics is collected. For details, refer to the related descriptions in Manner 3. It should be noted that, for a grouping manner, refer to the related descriptions of the grouping manner in the foregoing embodiment. Details are not described herein again.

In some possible embodiments, when determining that the first superimposed signal is an interference signal, the detection apparatus may further perform any one of the following processing:

(1) removing the first superimposed signal (that is, the interference signal), to reduce data processing pressure of the back end;
(2) skipping removing the first superimposed signal, but adding an interference tag to the first superimposed signal, where the interference tag indicates that the first superimposed signal is an interference signal; and
(3) skipping removing the first superimposed signal, and storing the confidence information, where the confidence information indicates the confidence that the first superimposed signal is an interference signal.

Optionally, in some possible embodiments, the following steps may be further performed. S303: Output a detection result.

In this embodiment of this application, when it is determined that the first superimposed signal is an interference signal, the detection result may be further output, and the detection result indicates that the first superimposed signal is an interference signal.

For example, the outputting the detection result may be: outputting the detection result to the back end.

In an implementation, the detection result includes the first time range and/or an interference tag, and the interference tag indicates that the first superimposed signal is an interference signal. In this way, the back end may be prompted to ignore a signal corresponding to the first time range when processing corresponding data, reducing data processing pressure of the back end.

In an implementation, the detection result further includes the confidence information, and the confidence information indicates confidence that the first superimposed signal is an interference signal. The confidence information may provide a reference for back-end processing, helping improve data processing efficiency.

It can be learned that, in this embodiment of this application, based on the superimposed signal whose signal strength exceeds the detection threshold in the superimposed results in the plurality of return signal measurement results, statistical processing such as difference, grouping, superimposition, signal energy statistics collection, or threshold detection is performed on the adjacent return signal measurement results in the plurality of return signal measurement results, to implement interference detection on the superimposed signal. In addition, it is also provided that interference detection on the superimposed signal may be implemented by performing statistical processing based on the plurality of return signal measurement results in the adjacent spatial locations. The detection method can effectively improve interference signal identification efficiency, helps improve sensor probing performance, and is friendly to hardware.

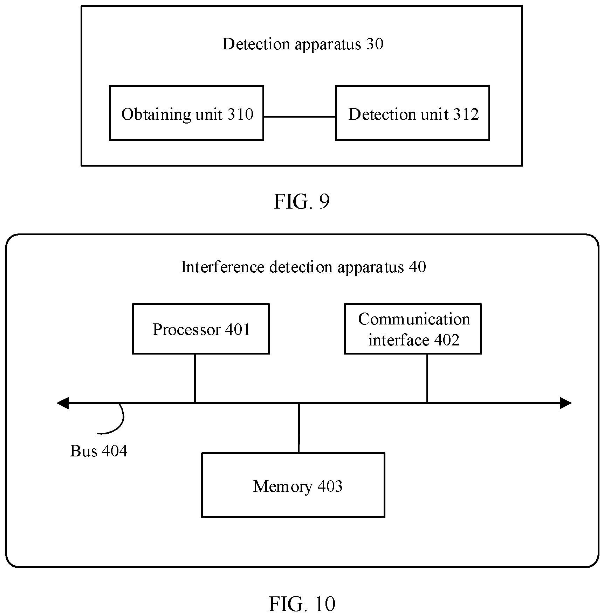

FIG. 9 is a diagram of a structure of a detection apparatus according to an embodiment of this application. The detection apparatus 30 includes an obtaining unit 310 and a detection unit 312. The detection apparatus 30 may be implemented through hardware, software, or a combination of software and hardware.

The obtaining unit 310 is configured to obtain a first superimposed signal from a first cumulative result, where the first cumulative result is obtained by superimposing N return signal measurement results, the first cumulative result includes signal strength distribution of at least one superimposed signal in a plurality of temporal locations, a signal strength peak value of the first superimposed signal is not less than a detection threshold, and N is a positive integer. The detection unit 312 is configured to determine whether the first superimposed signal is an interference signal.

The detection apparatus 30 may be configured to implement the method described in the embodiment in FIG. 3. In the embodiment in FIG. 3, the obtaining unit 310 may be configured to perform S301, and the detection unit 312 may be configured to perform S302.

In some possible embodiments, the detection apparatus 30 further includes an output unit (not shown in the figure), and the output unit may be configured to output a detection result.

In another embodiment, the obtaining unit 310 may be configured to perform any step in the method described in the embodiment in FIG. 3, the detection unit 312 may also be configured to perform any step in the method described in the embodiment in FIG. 3, and the output unit may also be configured to perform any step in the method described in the embodiment in FIG. 3. Alternatively, the steps implemented by the obtaining unit 310, the detection unit 312, and the output unit may be specified as required. It may be understood that the obtaining unit 310, the detection unit 312, and the output unit may separately perform different steps in the method shown in FIG. 3 to implement all functions of the detection apparatus 30.

One or more of the units in embodiments shown in FIG. 9 may be implemented by software, hardware, firmware, or a combination thereof. The software or firmware includes but is not limited to computer program instructions or code, and may be executed by a hardware processor. The hardware includes but is not limited to various integrated circuits, such as a central processing unit (central processing unit, CPU), a digital signal processor (digital signal processor, DSP), a field programmable gate array (field programmable gate array, FPGA), or an application-specific integrated circuit (application-specific integrated circuit, ASIC).

FIG. 10 is a diagram of a structure of an interference detection apparatus according to an embodiment of this application. As shown in FIG. 10, the interference detection apparatus 40 includes a processor 401, a communication interface 402, a memory 403, and a bus 404. The processor 401, the memory 403, and the communication interface 402 communicate with each other through the bus 404.

It should be understood that quantities of processors and memories in the interference detection apparatus 40 are not limited in this application.

In an implementation, the interference detection apparatus 40 may be the detection apparatus in the foregoing embodiment. The detection apparatus may be, for example, one or more of the following: a microcontroller unit (microcontroller unit, MCU), an electronic control unit (electronic control unit, ECU), or a multi-domain controller (multi-domain controller, MDC) in a vehicle. The detection apparatus may alternatively be a lidar sensor, a millimeter-wave radar sensor, an ultrasonic sensor, or another sensor that calculates a target distance based on a measured return signal, or may be a microcontroller unit (microcontroller unit, MCU) or an electronic control unit (electronic control unit, ECU) in a sensor. The detection apparatus may alternatively be a component in an MCU or a component in an ECU. The component may be, for example, a chip or an integrated circuit.

The bus 404 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by using only one line in FIG. 10. However, it does not indicate that there is only one bus or only one type of bus. The bus 404 may include a path for information transfer between components (such as, the memory 403, the processor 401, and the communication interface 402) of the interference detection apparatus 40.

The processor 401 may include any one or more of the following: processors such as a central processing unit (central processing unit, CPU), a microprocessor (microprocessor, MP), or a digital signal processor (digital signal processor, DSP).

The memory 403 is configured to provide storage space, and the storage space may store data such as an operating system and a computer program. The memory 403 may be one or a combination of a random access memory (random access memory, RAM), an erasable programmable read-only memory (erasable programmable read-only memory, EPROM), a read-only memory (read-only memory, ROM), a compact disc read-only memory (compact disc read-only memory, CD-ROM), or the like. The memory 403 may exist independently, or may be integrated into the processor 401.

The communication interface 402 may be configured to provide an information input or output for the processor 401. Alternatively, the communication interface 402 may be configured to receive data sent from the outside and/or send data to the outside, and may be a wired link interface including an Ethernet cable, or may be a wireless link (for example, Wi-Fi, Bluetooth, or universal wireless transmission) interface. Alternatively, the communication interface 402 may further include a transmitter (for example, a radio frequency transmitter or an antenna), a receiver, or the like coupled to the interface.

The processor 401 in the interference detection apparatus 40 is configured to read the computer program stored in the memory 403, and is configured to perform the foregoing method, for example, the method described in FIG. 3.

In a possible design manner, the interference detection apparatus 40 may be one or more modules in an execution body of the method shown in FIG. 3. The processor 401 may be configured to read one or more computer programs stored in the memory, to perform the following operations:

obtaining a first superimposed signal from a first cumulative result by using the obtaining unit 310, where the first cumulative result is obtained by superimposing N return signal measurement results, the first cumulative result includes signal strength distribution of at least one superimposed signal in a plurality of temporal locations, a signal strength peak value of the first superimposed signal is not less than a detection threshold, and N is a positive integer; and determining whether the first superimposed signal is an interference signal.

An embodiment of this application further provides a terminal. The terminal includes the detection apparatus 30 in the embodiment in FIG. 9, or includes the interference detection apparatus 40 in the embodiment in FIG. 10. The terminal may be configured to execute the interference signal detection method in the embodiment in FIG. 3.

In the foregoing embodiments in this specification, the descriptions of embodiments have respective focuses. For a part that is not described in detail in an embodiment, refer to related descriptions in other embodiments.

It should be noted that persons of ordinary skill in the art may see that, all or some of the steps in each method of the foregoing embodiments may be implemented by a program instructing related hardware. The program may be stored in a computer-readable storage medium. The storage medium includes a read-only memory (Read-Only Memory, ROM), a random access memory (Random Access Memory, RAM), a programmable read-only memory (Programmable Read-only Memory, PROM), an erasable programmable read-only memory (Erasable Programmable Read-Only Memory, EPROM), a one-time programmable read-only memory (One-time Programmable Read-Only Memory, OTPROM), an electrically-erasable programmable read-only memory, (Electrically-Erasable Programmable Read-Only Memory, EEPROM), a compact disc read-only memory (Compact Disc Read-Only Memory, CD-ROM), or another optical disk memory, magnetic disk memory, magnetic tape memory, or any other computer-readable medium that can be configured to carry or store data.

The technical solutions of this application essentially, or the part contributing to the conventional technology, or all or some of the technical solutions may be implemented in a form of a software product. A computer program product is stored in a storage medium and includes several instructions for instructing a device (which may be a personal computer, a server, or a network device, a robot, a single-chip microcomputer, a chip, a robot, or the like) to perform all or some of the steps of the methods described in embodiments of this application.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of the present invention.

**Claims**

1. An interference signal detection method, wherein the method comprises:

obtaining a first superimposed signal from a first cumulative result, wherein the first cumulative result is obtained by superimposing N return signal measurement results, the first cumulative result comprises signal strength distribution of at least one superimposed signal in a plurality of temporal locations, signal energy of the first superimposed signal is not less than a detection threshold, and N is a positive integer; and determining whether the first superimposed signal is an interference signal.

2. The method according to claim 1, wherein the first superimposed signal corresponds to a first time range; and the determining whether the first superimposed signal is an interference signal comprises: determining, based on the first time range, whether the first superimposed signal is an interference signal.

3.  The method according to claim 2, wherein the method further comprises:

    performing difference processing on the N return signal measurement results to obtain a difference result, wherein the difference result comprises signal strength distribution of a plurality of first difference points in the plurality of temporal locations; and
    the determining, based on the first time range, whether the first superimposed signal is an interference signal comprises:
    when a signal strength of a first difference point corresponding to the first time range in the difference result is not less than a first threshold, determining that the first superimposed signal is an interference signal.

4.  The method according to claim 3, wherein the N return signal measurement results correspond to K groups of measurement results, each group of measurement results comprises Q adjacent return signal measurement results in the N return signal measurement results, and Q and K are positive integers less than N; and
    the difference result is obtained by performing difference processing on K superimposed results, and the K superimposed results are obtained by superimposing each group of measurement results in the K groups of measurement results.

5.  The method according to claim 3, wherein the N return signal measurement results correspond to K groups of measurement results, each group of measurement results comprises Q adjacent return signal measurement results in the N return signal measurement results, and Q and K are positive integers less than N; and
    the difference result is obtained based on statistics on K initial difference results, and the K initial difference results are obtained by performing difference processing on each group of measurement results in the K groups of measurement results.

6.  The method according to claim 3, wherein a second temporal location is any one of the plurality of temporal locations, and a signal strength of a first difference point corresponding to the second temporal location in the difference result is one of the following cases:

    a difference between a maximum value of signal strengths corresponding to the second temporal location and a minimum value of the signal strengths corresponding to the second temporal location in the N return signal measurement results;
    a maximum value of a difference between signal strengths corresponding to the second temporal location in each adjacent pairs of return signal measurement results in the N return signal measurement results; or
    a variance or a standard deviation of the signal strengths corresponding to the second temporal location in the N return signal measurement results.

7.  The method according to claim 2, wherein the method further comprises:

    superimposing each of K groups of measurement results to obtain K superimposed results, wherein each of the K superimposed results comprises signal strength distribution of at least one second superimposed signal in the plurality of temporal locations, each of the K groups of measurement results comprises Q adjacent return signal measurement results in the N return signal measurement results, and both Q and K are positive integers less than N; and
    the determining, based on the first time range, whether the first superimposed signal is an interference signal comprises:

    determining, in the K superimposed results, a first statistical count of superimposed results in which signal energy that is of a second superimposed signal and that corresponds to the first time range exceeds a second threshold; and
    when the first statistical count is less than a third threshold, determining that the first superimposed signal is an interference signal.

8.  The method according to claim 2, wherein the N return signal measurement results correspond to a first spatial location, and the method further comprises:

    obtaining M return signal measurement results in a second spatial location adjacent to the first spatial location, wherein M is a positive integer less than or equal to N; and
    the determining, based on the first time range, whether the first superimposed signal is an interference signal comprises:
    determining, based on the first time range and the M return signal measurement results, whether the first superimposed signal is an interference signal.

9.  The method according to claim 8, wherein the determining, based on the first time range and the M return signal measurement results, whether the first superimposed signal is an interference signal comprises:

grouping the M return signal measurement results, and superimposing grouped return signal measurement results to obtain P superimposed results, wherein each of the P superimposed results comprises signal strength distribution of at least one third superimposed signal in the plurality of temporal locations, and P is a positive integer less than M;

determining, in the P superimposed results, a second statistical count of superimposed results in which signal energy that is of a third superimposed signal and that corresponds to the first time range exceeds a fourth threshold; and

when the second statistical count is less than a fifth threshold, determining that the first superimposed signal is an interference signal.

10. The method according to claim 9, wherein

when the second statistical count is a first value, confidence that the first superimposed signal is an interference signal is a first probability; or

when the second statistical count is a second value, confidence that the first superimposed signal is an interference signal is a second probability, wherein

the first value is less than the second value, the second value is less than the fifth threshold, and the first probability is greater than the second probability.

11. The method according to claim 8, wherein the determining, based on the first time range and the M return signal measurement results, whether the first superimposed signal is an interference signal comprises:

superimposing the M return signal measurement results to obtain a second cumulative result, wherein the second cumulative result comprises signal strength distribution of at least one fourth superimposed signal in the plurality of temporal locations; and

when signal energy of a fourth superimposed signal corresponding to the first time range in the second cumulative result is less than a sixth threshold, determining that the first superimposed signal is an interference signal.

12. The method according to claim 11, wherein the method further comprises:

obtaining confidence information, wherein the confidence information is obtained based on the signal energy of the first superimposed signal and the signal energy of the fourth superimposed signal corresponding to the first time range.

13. The method according to any one of claims 1 to 12, wherein after determining that the first superimposed signal is an interference signal, the method further comprises:

outputting a detection result, wherein the detection result comprises the first time range and/or an interference tag, and the interference tag indicates that the first superimposed signal is an interference signal.

14. The method according to claim 13, wherein the detection result further comprises the confidence information, and the confidence information indicates confidence that the first superimposed signal is an interference signal.

15. An interference signal detection apparatus, wherein the apparatus comprises:

an obtaining unit, configured to obtain a first superimposed signal from a first cumulative result, wherein the first cumulative result is obtained by superimposing N return signal measurement results, the first cumulative result comprises signal strength distribution of at least one superimposed signal in a plurality of temporal locations, a signal strength peak value of the first superimposed signal is not less than a detection threshold, and N is a positive integer; and

a detection unit, configured to determine whether the first superimposed signal is an interference signal.

16. The apparatus according to claim 15, wherein the first superimposed signal corresponds to a first time range; and

the detection unit is specifically configured to:

determine, based on the first time range, whether the first superimposed signal is an interference signal.

17. The apparatus according to claim 15 or 16, wherein the detection unit is specifically configured to:

perform difference processing on the N return signal measurement results to obtain a difference result, wherein the difference result comprises signal strength distribution of a plurality of first difference points in the plurality of temporal locations; and

when a signal strength of a first difference point corresponding to the first time range in the difference result is not less than a first threshold, determine that the first superimposed signal is an interference signal.

18. The apparatus according to claim 17, wherein a second temporal location is any one of the plurality of temporal locations, and a signal strength of a first difference point corresponding to the second temporal location in the difference result is one of the following cases:

a difference between a maximum value of signal strengths corresponding to the second temporal location and a minimum value of the signal strengths corresponding to the second temporal location in the N return signal measurement results;
a maximum value of a difference between signal strengths corresponding to the second temporal location in each adjacent pairs of return signal measurement results in the N return signal measurement results; or
a variance or a standard deviation of the signal strengths corresponding to the second temporal location in the N return signal measurement results.

19. The apparatus according to claim 16, wherein the processing unit is specifically configured to:

superimpose each of K groups of measurement results to obtain K superimposed results, wherein each of the K superimposed results comprises signal strength distribution of at least one second superimposed signal in the plurality of temporal locations, each of the K groups of measurement results comprises Q adjacent return signal measurement results in the N return signal measurement results, and both Q and K are positive integers less than N; and
determine, in the K superimposed results, a first statistical count of superimposed results in which signal energy that is of a second superimposed signal and that corresponds to the first time range exceeds a second threshold; and
when the first statistical count is less than a third threshold, determine that the first superimposed signal is an interference signal.

20. The apparatus according to claim 16, wherein the N return signal measurement results correspond to a first spatial location, and

the obtaining unit is further configured to obtain M return signal measurement results in a second spatial location adjacent to the first spatial location, wherein M is a positive integer less than or equal to N; and
the detection unit is specifically configured to determine, based on the first time range and the M return signal measurement results, whether the first superimposed signal is an interference signal.

21. The apparatus according to claim 20, wherein the detection unit is specifically configured to:

group the M return signal measurement results, and superimpose grouped return signal measurement results to obtain P superimposed results, wherein each of the P superimposed results comprises signal strength distribution of at least one third superimposed signal in the plurality of temporal locations, and P is a positive integer less than M;
determine, in the P superimposed results, a second statistical count of superimposed results in which signal energy that is of a third superimposed signal and that corresponds to the first time range exceeds a fourth threshold; and
when the second statistical count is less than a fifth threshold, determine that the first superimposed signal is an interference signal.

22. The apparatus according to claim 21, wherein

when the second statistical count is a first value, confidence that the first superimposed signal is an interference signal is a first probability; or
when the second statistical count is a second value, confidence that the first superimposed signal is an interference signal is a second probability, wherein
the first value is less than the second value, the second value is less than the fifth threshold, and the first probability is greater than the second probability.

23. The apparatus according to claim 20, wherein the detection unit is specifically configured to:

superimpose the M return signal measurement results to obtain a second cumulative result, wherein the second cumulative result comprises signal strength distribution of at least one fourth superimposed signal in the plurality of temporal locations; and
when signal energy of a fourth superimposed signal corresponding to the first time range in the second cumulative result is less than a sixth threshold, determine that the first superimposed signal is an interference signal.

24. The apparatus according to claim 23, wherein the detection unit is further configured to:
obtain confidence information, wherein the confidence information is obtained based on the signal energy of the first superimposed signal and the signal energy of the fourth superimposed signal corresponding to the first time range.

25. The apparatus according to any one of claims 15 to 24, wherein the apparatus further comprises an output unit, wherein the output unit is configured to output a detection result, wherein the detection result comprises the first time range and/or an interference tag, and the interference tag indicates that the first superimposed signal is an interference signal.

26. The apparatus according to claim 25, wherein the detection result further comprises the confidence information, and the confidence information indicates confidence that the first superimposed signal is an interference signal.

27. A chip, wherein the chip comprises at least one processor and a communication interface; and the communication interface is configured to receive and/or send data, and/or the communication interface is configured to provide an input and/or an output for the processor, and the at least one processor is configured to implement the method according to any one of claims 1 to 14.

28. A terminal, wherein the terminal comprises the apparatus according to any one of claims 15 to 26, or comprises the chip according to claim 16.

29. A computer-readable storage medium, wherein the computer-readable storage medium stores instructions, and when the instructions are run on at least one processor, the method according to any one of claims 1 to 14 is implemented.

30. A computer program product, comprising computer instructions, wherein when the computer instructions are run on a processor, the method according to any one of claims 1 to 14 is implemented.

[Step 1]: A plurality of ToF measurements

ToF_1

ToF_2

ToF_n

...

Weak noise or        Target        Strong
weak interference   object   interference

[Step 2]: Superimpose a plurality of ToFs to obtain a superimposed histogram

Cumulate

Superimposed histogram

[True]    [False]

[Step 3]: Threshold detection

Superimposed histogram

Detection threshold

Superimposed   Superimposed
signal 1              signal 2

FIG. 1

| Detection apparatus | Probing apparatus |

FIG. 2

S301: Obtain a first superimposed signal from a first cumulative result

S302: Determine whether the first superimposed signal is an interference signal

S303: Output a detection result

FIG. 3

First cumulative result

Wave 1  Wave 2

Detection threshold

$t_s$  $t_e$

FIG. 4

FIG. 5A

EP 4 535 672 A1

FIG. 5B

FIG. 5C

FIG. 6

Horizontal angle 1  Horizontal angle 2  Horizontal angle 3

Target object

Spacing between adjacent ToFs

Horizontal light spot divergence angle

Lidar

FIG. 7

FIG. 8A

FIG. 8B

Detection apparatus 30

Obtaining unit 310 —— Detection unit 312

FIG. 9

Interference detection apparatus 40

Processor 401

Communication
interface 402

Bus 404

Memory 403

FIG. 10

## INTERNATIONAL SEARCH REPORT

| International application No. |
|---|
| **PCT/CN2022/103439** |

**A.    CLASSIFICATION OF SUBJECT MATTER**

H04B 1/00(2006.01)i

According to International Patent Classification (IPC) or to both national classification and IPC

**B.    FIELDS SEARCHED**

Minimum documentation searched (classification system followed by classification symbols)

H04B,G01S

Documentation searched other than minimum documentation to the extent that such documents are included in the fields searched

Electronic data base consulted during the international search (name of data base and, where practicable, search terms used)

WPI, EPODOC, CNKI, CNPAT: 干扰, 差值, 雷达, 检测, 叠加, radar, interfere, detect+, overlap, difference

**C.    DOCUMENTS CONSIDERED TO BE RELEVANT**

| Category* | Citation of document, with indication, where appropriate, of the relevant passages | Relevant to claim No. |
|---|---|---|
| X | US 2008231497 A1 (DENSO CORP.) 25 September 2008 (2008-09-25)<br>claims 1-10 | 1-30 |
| A | WO 2014063867 A1 (VALEO SCHALTER UND SENSOREN GMBH) 01 May 2014 (2014-05-01)<br>entire document | 1-30 |
| A | CN 101335980 A (HUAWEI TECHNOLOGIES CO., LTD.) 31 December 2008 (2008-12-31)<br>entire document | 1-30 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 December 2022** | **21 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/103439**

| Patent document cited in search report | | | Publication date (day/month/year) | Patent family member(s) | | | Publication date (day/month/year) |
|---|---|---|---|---|---|---|---|
| US | 2008231497 | A1 | 25 September 2008 | DE | 102008014918 | A1 | 16 October 2008 |
| | | | | JP | 2008232830 | A | 02 October 2008 |
| | | | | CN | 101271157 | A | 24 September 2008 |
| WO | 2014063867 | A1 | 01 May 2014 | DE | 102012021239 | A1 | 30 April 2014 |
| | | | | EP | 2912488 | A1 | 02 September 2015 |
| CN | 101335980 | A | 31 December 2008 | None | | | |

Form PCT/ISA/210 (patent family annex) (January 2015)